# EUROPÄISCHE PATENTSCHRIFT

(11) **EP 4 277 489 B1**
(45) Veröffentlichungstag und Bekanntmachung des Hinweises auf die Patenterteilung: **22.04.2026**
(21) Anmeldenummer: 21805395.7
(22) Anmeldetag: 26.10.2021
(51) Int. Cl.: A41F 1/00

(54) **MAGNET-MECHANISCHE VERSCHLUSSVORRICHTUNG**
MAGNETIC-MECHANICAL CLOSURE DEVICE
DISPOSITIF DE FERMETURE MÉCANIQUE MAGNÉTIQUE

(30) Priorität: 13.01.2021 DE 102021200260
(43) Veröffentlichungstag der Anmeldung: 22.11.2023
(73) Patentinhaber: Fidlock GmbH, 30659 Hannover (DE)
(72) Erfinder: SCHRÖDER, Michael, 34537 Bad Wildungen (DE); BOTKUS, Breido, 30175 Hannover (DE)
(74) Vertreter: Maikowski & Ninnemann Patentanwälte Partnerschaft mbB
(86) Internationale Anmeldenummer: PCT/EP2021/079600
(87) Internationale Veröffentlichungsnummer: WO 2022/152418

(56) Entgegenhaltungen:
- EP-A1- 3 616 552
- EP-B1- 2 436 280
- US-A1- 2012 297 590
- US-A1- 2016 003 274
- US-A1- 2016 037 879

## Beschreibung

Die Erfindung betrifft eine Verschlussvorrichtung nach dem Oberbegriff des Anspruchs 1.

Eine solche Verschlussvorrichtung dient zum Verbinden zweier Baugruppen miteinander, zum Beispiel als Verschluss für Taschen, Bekleidungsstücke, Schuhe oder Helme, zum Herstellen einer Steckverbindung beispielsweise für elektrische oder elektronische Anwendungen oder als Kopplung zum Beispiel für Gurte oder Seile, aber auch um Komponenten und Zubehörteile an übergeordneten Baugruppen miteinander zu verbinden, zum Beispiel in oder an Fahrzeugen (zum Beispiel in Kraftfahrzeugen, Flugzeugen oder auch Schiffen oder Booten), an Koffern oder Taschen oder dergleichen.

Eine solche Verschlussvorrichtung weist ein erstes Verschlussteil auf, das ein Basiselement und zumindest ein zu dem Basiselement bewegbares Verschlusselement mit einem daran angeordneten Formschlussabschnitt aufweist. Ein zweites Verschlussteil weist demgegenüber ein Eingriffselement mit einem daran geformten Eingriffsabschnitt auf. Das erste Verschlussteil und das zweite Verschlussteil sind in einer Öffnungsstellung der Verschlussvorrichtung voneinander getrennt und können zum Schließen der Verschlussvorrichtung entlang einer Schließrichtung aneinander angesetzt werden. Der Formschlussabschnitt des zumindest einen Verschlusselements ist hierbei in eine Eingriffsrichtung im Wesentlichen quer zu der Schließrichtung mit dem Eingriffsabschnitt des Eingriffselements in Eingriff bringbar, sodass in einer Schließstellung das erste Verschlussteil und das zweite Verschlussteil entlang der Schließrichtung aneinander gehalten sind.

Aufgrund der Wirkverbindung des Verschlusselements des ersten Verschlussteils mit dem Eingriffselement des zweiten Verschlussteils sind die Verschlussteile in der Schließstellung der Verschlussvorrichtung zueinander festgelegt, sodass Baugruppen, die den Verschlussteilen zugeordnet sind, über die Verschlussteile miteinander verbunden sind. Durch Betätigen des zumindest einen Verschlusselements können die Verschlussteile voneinander gelöst werden, sodass die Baugruppen voneinander getrennt werden können.

Bei einer solchen Verschlussvorrichtung besteht grundsätzlich ein Bedürfnis nach einem festen Halt in der Schließstellung, bei jedoch einfacher Handhabbarkeit zum Schließen der Verschlussvorrichtung und auch zum Öffnen der Verschlussvorrichtung.

Bei einer aus der WO 2008/006357 A2 bekannten Verbindungskonstruktion ist an einem Verschlussmodul ein Federverrieglungselement und an einem anderen Verschlussmodul ein (starres) Sperrstück angeordnet. In einer Schließstellung stehen das Federverrieglungselement und das Sperrstück miteinander in Eingriff, sodass die Verschlussmodule aneinandergehalten sind. Durch Bewegen der Verschlussmodule relativ zueinander kann die Verbindungkonstruktion geöffnet werden, sodass die Verschlussmodule voneinander getrennt werden können. Über magnetische Mittel wird das Ansetzen magnetisch unterstützt, indem die Verschlussmodule magnetisch zueinander hin gezogen werden und der Eingriff zwischen den Verschlussmodulen somit zumindest weitestgehend selbsttätig hergestellt wird.

Aus der US 8,555,470 ist eine Verschlussvorrichtung in Form eines Karabiners bekannt, bei dem ein Schließstück des Karabiners in einer Schließstellung magnetisch gekoppelt ist.

Bei einer aus der EP 2 959 174 B1 bekannten Verschlussvorrichtung sind zwei Verschlusselemente an einem Basiselement schwenkbar angeordnet. Die Verschlusselemente sind über eine Feder in Richtung einer Schließstellung mechanisch vorgespannt. Bei Ansetzen eines Verschlussteils werden die Verschlusselemente durch Auflaufen des Verschlussteils auf Auflaufschrägen der Verschlusselemente auseinander gedrückt, wobei das Ansetzen des Verschlussteils magnetisch unterstützt wird.

Die US 2016/0037879 A1 offenbart einen Versschluss gemäß dem Oberbegriff des Anspruchs 1, für eine Armbanduhr, bei dem ein erstes Verschlussteil Schieber mit daran geformten Vorsprüngen zum Verriegeln mit einem zweiten Verschlussteil aufweist. Die Schieber werden in einer geöffneten Stellung des Verschlusses magnetisch in einer Stellung gehalten, die einer verriegelten Stellung entspricht.

Aufgabe der vorliegenden Erfindung ist es, eine Verschlussvorrichtung zur Verfügung zu stellen, die eine feste Verbindung bei einfacher Bedienbarkeit sowohl zum Schließen als auch zum Öffnen der Verschlussvorrichtung ermöglicht.

Diese Aufgabe wird durch einen Gegenstand mit den Merkmalen des Anspruchs 1 gelöst. Demnach weist die Verschlussvorrichtung ein an dem zumindest einen Verschlusselement des ersten Verschlussteils angeordnetes, erstes Magnetelement und ein an dem Eingriffselement des zweiten Verschlussteils angeordnetes, zweites Magnetelement auf. Das zumindest eine Verschlusselement des ersten Verschlussteils nimmt in der Öffnungsstellung eine erste Position relativ zu dem Basiselement ein. Das erste Magnetelement und das zweite Magnetelement wirken beim Schließen der Verschlussvorrichtung magnetisch anziehend zusammen, sodass das zumindest eine Verschlusselement mit dem Formschlussabschnitt in die Eingriffsrichtung aus der ersten Position relativ zu dem Basiselement bewegt wird, um den Formschlussabschnitt mit dem Eingriffsabschnitt des Eingriffselements in Wirkverbindung zu bringen.

In einer Ausgestaltung ist das zumindest eine Verschlusselement des ersten Verschlussteils in der Öffnungsstellung so kraftbeaufschlagt, dass das zumindest eine Verschlusselement die erste Position relativ zu dem Basiselement einnimmt. Das zumindest eine Verschlusselement wird somit aufgrund einer Kraft in Richtung der ersten Position belastet und dadurch in der ersten Position gehalten, wenn die Verschlussvorrichtung geöffnet ist.

Ist die Verschlussvorrichtung geöffnet, so befindet sich das zumindest eine Verschlusselement des ersten Verschlussteils in einer ersten Position, die einer solchen Stellung des Verschlusselements relativ zu dem Basiselement des ersten Verschlussteils entspricht, in der der Eingriff des Verschlusselements mit dem Eingriffsabschnitt des Eingriffselements des zweiten Verschlussteils aufgehoben ist. Zum Beispiel durch Kraftbeaufschlagung des Verschlusselements in Richtung dieser ersten Position oder - zusätzlich oder alternativ - zum Beispiel durch Vorsehen eines Sperrelements (wie dies nachfolgend noch erläutert werden soll) wird das Verschlusselement somit in geöffneter Stellung gehalten, sodass ein Schließen der Verschlussvorrichtung für einen Nutzer einfach und komfortabel möglich ist.

Wird die Verschlussvorrichtung geschlossen, so wirken das erste Magnetelement an dem zumindest einen Verschlusselement und das zweite Magnetelement an dem zweiten Verschlussteil magnetisch anziehend zusammen. Hierdurch wird zum einen eine magnetische Anziehungskraft zwischen den Verschlussteilen bereitgestellt, die das Ansetzen der Verschlussteile aneinander magnetisch unterstützt. Zum zweiten wird durch die magnetische Wechselwirkung des ersten Magnetelements an dem Verschlusselement und des zweiten Magnetelements am zweiten Verschlussteil bewirkt, dass das zumindest eine Verschlusselement aus der ersten Position heraus verstellt und in Eingriff mit dem Eingriffsabschnitt des Eingriffselements gebracht wird. Hierzu sind die Magnetelemente zum Beispiel so dimensioniert, dass die magnetische Anziehungskraft zwischen den Magnetelementen zumindest dann, wenn die Magnetelemente hinreichend weit aneinander angenähert worden sind, eine Kraftbeaufschlagung des Verschlusselements in Richtung der ersten Position übersteigt, sodass die Wirkverbindung zwischen dem Verschlusselement und dem Eingriffselement (selbsttätig) hergestellt wird. Weil die magnetische Wechselwirkung zwischen den Magnetelementen insbesondere im (relativen) Nahfeld stark ist, wird die Verbindung zwischen dem Verschlusselement und dem Eingriffselement erst hergestellt, wenn die Verschlussteile hinreichend weit einander angenähert worden sind, sodass der Eingriff zwischen dem Verschlusselement und dem Eingriffsabschnitt des Eingriffselements zuverlässig hergestellt werden kann.

In der Schließstellung wird das zumindest eine Verschlusselement durch die magnetische Wechselwirkung zwischen dem ersten Magnetelement am Verschlusselement und dem zweiten Magnetelement am zweiten Verschlussteil in Eingriff mit dem Eingriffselement gehalten, sodass die Verschlussteile miteinander verbunden und somit in der Schließstellung belastbar aneinandergehalten sind.

Eine Kraftbeaufschlagung des zumindest einen Verschlusselements des ersten Verschlussteils in der Öffnungsstellung kann insbesondere aufgrund der Magnetwirkung des ersten Magnetelements bewirkt werden. So kann das erste Magnetelement des Verschlusselements magnetisch mit einem weiteren Magnetelement des ersten Verschlussteils zusammenwirken, sodass aufgrund der magnetischen Wechselwirkung das Verschlusselement in der ersten Position gehalten wird, wenn die Verschlussvorrichtung geöffnet ist. Wird die Verschlussvorrichtung geschlossen und somit das zweite Verschlussteil dem ersten Verschlussteil angenähert, so übersteigt bei hinreichender Annäherung die magnetische Anziehung zwischen dem ersten Magnetelement des Verschlusselements und dem zweiten Magnetelement des zweiten Verschlussteils die Kraftbeaufschlagung des zumindest einen Verschlusselements in Richtung der ersten Position, sodass das zumindest eine Verschlusselement aus der ersten Position heraus bewegt und in Eingriff mit dem Eingriffsabschnitt des Eingriffselements gebracht wird.

Zusätzlich oder alternativ kann eine Kraftbeaufschlagung aber auch über andere Vorspannelemente, zum Beispiel ein mechanisches Federelement, bewirkt werden.

Weist das erste Verschlussteil beispielsweise zwei Verschlusselemente auf, die zum Beispiel nach Art einer Zange zusammenwirken und jeweils mit dem Eingriffsabschnitt des Eingriffselements in Eingriff gebracht werden können, so kann die Kraftbeaufschlagung beispielsweise durch erste Magnetelemente, die an den Verschlusselementen angeordnet sind, bewirkt werden, beispielsweise durch magnetische Abstoßung zwischen diesen ersten Magnetelementen.

In einer Ausgestaltung weist das erste Verschlussteil ein Sperrelement auf, das in der Öffnungsstellung mit einem Sperrabschnitt auf das zumindest eine Verschlusselement einwirkt, um das zumindest eine Verschlusselement in der ersten Position zu halten. Ein solches Sperrelement kann beispielsweise als elastisch federndes Element ausgebildet sein, zum Beispiel in Form eines Gummielements oder dergleichen. Das Sperrelement bewirkt, dass in der Öffnungsstellung der Verschlussvorrichtung das Verschlusselement nicht aus der ersten Position heraus gelangen kann, sondern durch das Sperrelement in dieser ersten Position gesperrt ist. Sind an dem ersten Verschlussteil beispielsweise zwei Verschlusselemente vorgesehen, kann das Sperrelement mit dem Sperrabschnitt zwischen den Verschlusselementen einliegen, sodass die Verschlusselemente nicht einander angenähert werden können.

In einer Ausgestaltung weist das Sperrelement einen Auslöseabschnitt auf, der in einen Bereich hineinragt, in den hinein das zweite Verschlussteil eingeführt wird, wenn die Verschlussteile zum Schließen der Verschlussvorrichtung aneinander angesetzt werden. Der Auslöseabschnitt ist dazu ausgebildet, beim Schließen der Verschlussvorrichtung mit dem zweiten Verschlussteil zusammenzuwirken, sodass dadurch das Sperrelement aus einer Sperrstellung heraus bewegt wird und somit das zumindest eine Verschlusselement freigibt.

Alternativ kann das Sperrelement beispielsweise aber auch magnetisch bewegt werden, zum Beispiel indem das Sperrelement oder ein anderes am ersten Verschlussteil angeordnetes Bauteil magnetisch mit dem zweiten Verschlussteil zusammenwirkt und dadurch das Sperrelement verstellt wird, sodass das Sperrelement bei Ansetzen der Verschlussteile aneinander durch magnetische Wechselwirkung aus seiner Sperrstellung heraus bewegt wird.

Durch ein solches Sperrelement kann bewirkt werden, dass die Wirkverbindung zwischen dem zumindest einen Verschlusselement des ersten Verschlussteils und dem Eingriffsabschnitt des Eingriffselements des zweiten Verschlussteils erst hergestellt wird, wenn die Verschlussteile (nahezu) vollständig und bestimmungsgemäß aneinander angesetzt sind, sodass die Verriegelung zwischen den Verschlussteilen zuverlässig hergestellt werden kann. Dadurch, dass das Sperrelement erst mechanisch durch Wechselwirken mit dem zweiten Verschlussteil freigegeben wird, kann eine Fehlverriegelung durch ein zu frühes Bewegen des zumindest einen Verschlusselements verhindert werden.

Bei Verwendung eines solchen Sperrelements kann gegebenenfalls auch auf eine (zusätzliche) Kraftbeaufschlagung in Richtung der ersten Position verzichtet werden. Bei einer solchen Ausgestaltung umfasst eine Verschlussvorrichtung allgemein ein erstes Verschlussteil, das ein Basiselement und zumindest ein zu dem Basiselement bewegbares Verschlusselement mit einem daran angeordneten Formschlussabschnitt aufweist, und ein zweites Verschlussteil, das ein Eingriffselement mit einem daran geformten Eingriffsabschnitt aufweist. Das erste Verschlussteil und das zweite Verschlussteil sind in einer Öffnungsstellung der Verschlussvorrichtung voneinander getrennt und zum Schließen der Verschlussvorrichtung entlang einer Schließrichtung aneinander ansetzbar. Der Formschlussabschnitt des zumindest einen Verschlusselements ist in eine Eingriffsrichtung im Wesentlichen quer zu der Schließrichtung mit dem Eingriffsabschnitt des Eingriffselements in Eingriff bringbar, sodass in einer Schließstellung das erste Verschlussteil und das zweite Verschlussteil entlang der Schließrichtung aneinander gehalten sind. Ein erstes Magnetelement ist an dem ersten Verschlussteil angeordnet, und ein zweites Magnetelement an dem Eingriffselement des zweiten Verschlussteils angeordnet, wobei das erste Verschlussteil ein Sperrelement aufweist, das in der Öffnungsstellung mit einem Sperrabschnitt auf das zumindest eine Verschlusselement einwirkt, um das zumindest eine Verschlusselement in einer ersten Position relativ zu dem Basiselement zu halten, wobei das zweite Verschlussteil ausgebildet ist, beim Schließen (direkt oder indirekt) auf das Sperrelement einzuwirken, um das zumindest eine Verschlusselement freizugeben, sodass das zumindest eine Verschlusselement mit dem Formschlussabschnitt in die Eingriffsrichtung aus der ersten Position relativ zu dem Basiselement bewegt wird, um den Formschlussabschnitt mit dem Eingriffsabschnitt des Eingriffselements in Eingriff zu bringen.

Soll die Verschlussvorrichtung wieder geöffnet werden, so kann das zumindest eine Verschlusselement betätigt werden, um das Verschlusselement entgegen der magnetischen Anziehung zwischen dem ersten Magnetelement und dem zweiten Magnetelement außer Eingriff von dem Eingriffselement zu bringen. Ist die Wirkverbindung zwischen dem zumindest einen Verschlusselement und dem Eingriffsabschnitt des Eingriffselements aufgehoben, können die Verschlussteile voneinander getrennt werden. Weil beim Öffnen auch das erste Magnetelement am Verschlusselement zu dem zweiten Magnetelement am Eingriffselement bewegt wird und somit eine magnetische Anziehung zwischen den Magnetelementen abgeschwächt (oder gegebenenfalls gar in eine magnetische Abstoßung umgekehrt) wird, kann das Öffnen in einfacher, komfortabler Weise erfolgen.

Das Betätigen des zumindest einen Verschlusselements kann beispielsweise händisch durch einen Nutzer erfolgen, indem ein Nutzer an einem Betätigungsabschnitt des Verschlusselements angreift und das Verschlusselement bewegt. Das Betätigen des Verschlusselements kann beispielsweise aber auch über einen Betätigungsmechanismus (beispielsweise unter Verwendung eines Betätigungselements in Form eines Hebels oder eines Drückers) mit einem Gestänge, Zugleinen oder -schnüre, einer Kraftübertragung über ein Getriebe oder kraftumleitende Schrägen, einem Exzenterelement oder dergleichen erfolgen.

Zusätzlich oder alternativ kann ein Betätigen des zumindest einen Verschlusselements magnetisch erfolgen, beispielweise indem das zweite Magnetelement des zweiten Verschlussteils umpolbar ist, zum Beispiel indem das zweite Magnetelement am zweiten Verschlussteil mechanisch so verdreht oder verschoben werden kann, dass anstelle eines ungleichnamigen Pols ein gleichnamiger Pol in Gegenüberlage mit dem ersten Magnetelement des Verschlusselements des ersten Verschlussteils gebracht wird und somit eine magnetische Anziehung in eine magnetische Abstoßung umgekehrt wird. Hierdurch kann das Verschlusselement magnetisch außer Eingriff von dem Eingriffsabschnitt des Eingriffselements bewegt werden.

Erfindungsgemäß ist das zumindest eine Verschlusselement um eine Schwenkachse zu dem Basiselement schwenkbar. Die Schwenkachse kann entlang der Schließrichtung, senkrecht zur Schließrichtung oder auch unter einem schrägen Winkel zur Schließrichtung erstreckt sein. Die Schwenkachse ist hierbei so zu dem Eingriffsabschnitt des Eingriffselements des zweiten Verschlussteils beabstandet, dass das zumindest eine Verschlusselement des ersten Verschlussteils quer, zum Beispiel zumindest näherungsweise senkrecht oder entlang einer durch eine zugeordnete Schwenkachse vorgegebene Kreisbahn, mit dem Eingriffsabschnitt des Eingriffselements in Eingriff gebracht werden kann.

Zur schwenkbaren Lagerung kann das zumindest eine Verschlusselement beispielsweise über ein Achselement mit dem Basiselement gekoppelt sein, sodass das zumindest eine Verschlusselement um das Achselement zu dem Basiselement verdrehbar ist.

Alternativ, nicht Erfindungsgemäß, zu einer solchen Verschwenkbarkeit kann das zumindest eine Verschlusselement beispielsweise zu dem Basiselement verschiebbar sein. Beispielsweise kann das Verschlusselement entlang einer geradlinigen Verschiebebahn oder entlang einer gekrümmten Verschiebebahn zu dem Basiselement bewegbar sein. In der ersten Position ist das Verschlusselement quer zur Schließrichtung nach außen versetzt. Bei Schließen der Verschlussvorrichtung wird das zumindest eine Verschlusselement entlang der Eingriffsrichtung quer zur Schließrichtung in Wirkverbindung mit dem Eingriffsabschnitt des Eingriffselements gebracht, sodass die Verschlussteile miteinander verbunden werden und in der Schließstellung aneinandergehalten sind.

In einer Ausgestaltung weist das zumindest eine Verschlusselement einen Klauenabschnitt auf, der einen Formschlussabschnitt zum formschlüssigen Hintergreifen des Eingriffsabschnitts ausbildet. Der Klauenabschnitt kann beispielsweise nach Art einer Halbschale geformt sein, wobei der Formschlussabschnitt beispielsweise entlang eines Kreisbogens um die Schließrichtung erstreckt ist. Der Formschlussabschnitt ist hierbei vorzugsweise der Formgebung des Eingriffselements des zweiten Verschlussteils angepasst, das beispielsweise rotationssymmetrisch um die Schließrichtung geformt ist. In einer weiteren Ausgestaltung kann der Formschlussabschnitt auch in Form eines Zapfens ausgebildet sein, der mit dem den Zapfen aufnehmenden Eingriffsabschnitt eine formschlüssige Verbindung bildet.

Der Formschlussabschnitt ist beispielsweise axial versetzt zu dem an dem zumindest einen Verschlusselement angeordneten ersten Magnetelement. Beispielsweise kann das erste Magnetelement an einem axial zu dem Formschlussabschnitt beabstandeten, senkrecht zur Schließrichtung erstreckten Wandungsabschnitt des Klauenabschnitts angeordnet sein, sodass bei Schließen der Verschlussvorrichtung eine magnetische Anziehung zwischen dem ersten Magnetelement am Verschlusselement und dem zweiten Magnetelement am Eingriffselement sowohl entlang der Schließrichtung als auch entlang der quer zur Schließrichtung gerichteten Eingriffsrichtung besteht und somit die Verschlussteile zueinander hingezogen und zudem das Verschlusselement und das Eingriffselement in Eingriff miteinander gebracht werden.

Das erste Magnetelement des zumindest einen Verschlusselements und der Formschlussabschnitt können beispielsweise starr miteinander verbunden sein. Alternativ können der Formschlussabschnitt und das erste Magnetelement auch elastisch zueinander bewegbar sein, was beispielsweise ermöglichen kann, eine spielfreie Verbindung zwischen den Verschlussteilen herzustellen und Toleranzen bei der Verbindung auszugleichen.

Das Basiselement kann beispielsweise durch ein Gehäuseelement des ersten Verschlussteils verwirklicht sein, zu dem das zumindest eine Verschlusselement verstellbar ist. Das Basiselement kann aber auch durch ein weiteres (im Wesentlichen baugleiches, aber zum Beispiel spiegelverkehrtes) Verschlusselement verwirklicht sein, sodass Verschlusselemente zueinander verstellbar und zum Beispiel aneinander nach Art einer Zange gelagert sind, ohne dass ein zusätzliches Gehäuseelement vorhanden ist.

In einer Ausgestaltung weist das erste Verschlussteil zwei Verschlusselemente und zwei jeweils an einem der Verschlusselemente angeordnete, erste Magnetelemente auf. Die Verschlusselemente können jeweils mit dem Eingriffselement des zweiten Verschlussteils in Eingriff gebracht werden, wobei die Verschlusselemente entgegen gerichtet zueinander bewegbar sind und somit von unterschiedlichen Seiten mit dem Eingriffsabschnitt des Eingriffselements des zweiten Verschlussteils in Eingriff gebracht werden können.

Die zwei Verschlusselemente können zum Beispiel jeweils verschwenkbar an einem Basiselement in Form eines Gehäuseelements des ersten Verschlussteils angeordnet sein. Alternativ sind die Verschlusselemente bewegbar aneinander angeordnet.

Die zwei Verschlusselemente können beispielsweise in der Schließstellung das Eingriffselement so zwischen sich aufnehmen, dass ein erstes der Verschlusselemente an einer ersten Seite des Eingriffselements und ein zweites der Verschlusselemente an einer zweiten Seite des Eingriffselements zu liegen kommt. Die Verschlusselemente umgreifen in der Schließstellung somit das Eingriffselement, sodass dadurch eine sichere, belastbare Verbindung zwischen den Verschlussteilen hergestellt ist.

Beispielsweise können die Verschlusselemente jeweils einen Klauenabschnitt mit einem kreisbogenförmigen Formschlussabschnitt aufweisen, sodass die Verschlusselemente das Eingriffselement um einen Winkel (gemessen um die Schließrichtung) größer als 180°, vorzugsweise größer als 270°, weiter vorzugsweise größer als 315° umgreifen.

In einer Ausgestaltung sind die Verschlusselemente über eine Kopplungseinrichtung zur gemeinsamen Bewegung miteinander zwangsgekoppelt. Hierunter ist zu verstehen, dass die Verschlusselemente nicht unabhängig voneinander bewegbar, beispielsweise verschwenkbar sind, sondern eine Bewegung des einen Verschlusselements stets mit einer Bewegung des anderen Verschlusselements einhergeht. Die Verschlusselemente sind somit nur synchron zueinander bewegbar, wobei die Bewegung der Verschlusselemente nicht zwingend gleichförmig sein muss, sondern eine Bewegung des einen Verschlusselements beispielsweise in übersetzter oder untersetzter Weise in eine Bewegung des anderen Verschlusselements übertragen wird.

Sind die Verschlusselemente beispielsweise jeweils verschwenkbar an einem Basiselement des ersten Verschlussteils gelagert, so kann die Zwangskupplung bewirken, dass ein Verschwenken des einen Verschlusselements stets mit einem Verschwenken auch des anderen Verschlusselements einhergeht, wobei die Verschlusselemente vorzugsweise entgegengerichtet zueinander verschwenkt werden. Dies ermöglicht, dass beim Schließen der Verschlussvorrichtung die Verschlusselemente synchron von unterschiedlichen Seiten mit dem Eingriffselement des zweiten Verschlussteils in Eingriff gebracht und analog beim Öffnen der Verschlussvorrichtung die Verschlusselemente synchron außer Eingriff von dem Eingriffselement bewegt werden.

Eine solche Zwangskopplung kann mechanisch hergestellt werden. Beispielsweise können die Verschlusselemente jeweils eine Verzahnung aufweisen, wobei durch Verzahnungseingriff der Verzahnungen die Verschlusselemente nur in Abhängigkeit voneinander bewegt werden können. Alternativ kann eine Zwangskopplung auch über ein Gestänge, eine Scheibenkupplung, eine Riemenkopplung oder eine andere Kopplungseinrichtung hergestellt werden.

In einer Ausgestaltung sind die Verschlusselemente in der Öffnungsstellung durch abstoßende Wirkung der ersten Magnetelemente relativ zueinander kraftbeaufschlagt. Jedes Verschlusselement weist vorzugsweise ein erstes Magnetelement auf, wobei die ersten Magnetelemente sich beispielsweise magnetisch abstoßend gegenüberstehen und somit die Verschlusselemente in der Öffnungsstellung der Verschlussvorrichtung mit den ersten Magnetelementen voneinander weg gedrückt werden. Dies kann dadurch erreicht werden, dass die ersten Magnetelemente mit gleichnamigen Polen zueinander hinweisen oder deren Magnetisierungsrichtung vertikal zur Eingriffsrichtung gleichgerichtet ist. Werden die Verschlussteile einander angenähert, so übersteigt nach hinreichender Annäherung der Verschlussteile aneinander die magnetische Anziehungskraft zwischen den ersten Magnetelementen der Verschlusselemente des ersten Verschlussteils und dem zweiten Magnetelement des zweiten Verschlussteils die magnetische Abstoßung zwischen den ersten Magnetelementen untereinander, sodass die Verschlusselemente beispielsweise mit ihren Klauenabschnitt zueinander hin gezogen werden und somit der Eingriff zwischen den Verschlusselementen und dem Eingriffselement des zweiten Verschlussteils hergestellt wird.

Grundsätzlich können die Magnetelemente des ersten Verschlussteils und des zweiten Verschlussteils durch Permanentmagnete, Elektromagnete oder durch passivmagnetische Anker, zum Beispiel aus einem ferromagnetischen Material, hergestellt sein.

Weist das erste Verschlussteil beispielsweise lediglich ein Verschlusselement auf, so kann das erste Magnetelement durch einen Permanentmagneten oder einen magnetischen Anker ausgestaltet sein. Im ersten Fall ist das zweite Magnetelement des zweiten Verschlussteils als Permanentmagnet oder magnetische Anker ausgestaltet, im zweiten Fall als Permanentmagnet.

Weist das erste Verschlussteil zwei zueinander bewegbare Verschlusselemente auf, so können an jedem Verschlusselement beispielsweise ein erstes Magnetelement in Form eines Permanentmagneten angeordnet sein. In diesem Fall kann das zweite Magnetelement beispielsweise ebenfalls durch einen Permanentmagneten oder alternativ durch einen magnetischen Anker ausgestaltet sein.

Denkbar ist aber auch, dass beispielsweise ein erstes Magnetelement durch einen Permanentmagneten und das andere erste Magnetelement durch einen magnetischen Anker ausgestaltet ist, wobei die Kraftbeaufschlagung zwischen den Verschlusselementen des ersten Verschlussteils beispielsweise durch eine mechanische Vorspannung, zum Beispiel über ein Federelement, bewirkt wird. Das zweite Magnetelement kann in diesem Fall durch einen Permanentmagneten oder aber auch durch einen magnetischen Anker ausgestaltet sein.

Denkbar ist zudem auch, dass das zweite Magnetelement durch einen Permanentmagneten, die ersten Magnetelemente der Verschlusselemente des ersten Verschlussteils aber jeweils durch einen magnetischen Anker verwirklicht sind. Auch in diesem Fall wird die Kraftbeaufschlagung zwischen den Verschlusselementen des ersten Verschlussteils beispielsweise durch eine mechanische Vorspannung, zum Beispiel über ein Federelement, bewirkt.

In einer Ausgestaltung weist das erste Verschlussteil ein Vorspannelement auf, das ausgebildet ist, das zumindest eine Verschlusselement in die Eingriffsrichtung zu belasten. Ein solches Vorspannelement kann beispielsweise durch eine mechanische Feder ausgebildet sein, wobei durch ein solches Vorspannelement die erste Position, in der das zumindest eine Verschlusselement bei geöffneter Verschlussvorrichtung ist, in definierter Weise eingestellt werden kann. Das Vorspannelement kann beispielsweise umso stärker gespannt werden, je weiter das Verschlusselement entgegen der Eingriffsrichtung zu dem Basiselement verstellt wird. Schwächt sich eine Kraftbeaufschlagung aufgrund magnetischer Wirkung an dem Verschlusselement entgegen der Eingriffsrichtung ab, so entspricht die erste Position der Stellung des Verschlusselements, in der die Kraft des Vorspannelements und die zum Beispiel magnetische Kraftbeaufschlagung im Gleichgewicht sind.

In einer Ausgestaltung weist das erste Verschlussteil zumindest einen ersten elektrischen Kontakt und das zweite Verschlussteil zumindest einen zweiten elektrischen Kontakt auf. Der zumindest eine erste elektrische Kontakt und der zumindest eine zweite elektrische Kontakt sind in der Schließstellung der Verschlussvorrichtung elektrisch miteinander kontaktiert. Der zumindest eine elektrische Kontakt des ersten Verschlussteils kann beispielsweise an dem zumindest einen Verschlusselement angeordnet sein. Der zumindest eine zweite elektrische Kontakt des zweiten Verschlussteils kann demgegenüber beispielsweise an dem Eingriffselement angeordnet sein.

Beispielsweise kann jedes Verschlussteil mehrere Kontaktelemente aufweisen, sodass über die Verschlussvorrichtung eine mehrpolige elektrische Verbindung hergestellt werden kann.

Die Herstellung der elektrischen Kontaktierung und der mechanischen Verbindung kann zum Beispiel in zeitlich gestaffelter Weise erfolgen. Vorteilhaft kann hierbei sein, dass beim Schließen zunächst die mechanische Verbindung hergestellt wird und zeitlich anschließend die elektrische Kontaktierung zwischen den Kontaktelementen erfolgt. Dies kann insbesondere ermöglichen, dass beim Schließen und auch beim Öffnen die Kontaktelemente der Verschlussteile nicht schleifend übereinander reiben, sondern beim Schließen die elektrische Kontaktierung in die Eingriffsrichtung quer zur Schließrichtung erst erfolgt, nachdem die mechanische Verbindung bereits hergestellt ist, und beim Öffnen die elektrische Kontaktierung entgegen der Eingriffsrichtung zunächst aufgehoben wird, bevor die mechanische Verbindung gelöst wird.

In einer Ausgestaltung weist die Verschlussvorrichtung eine Anzeigeeinrichtung zum Anzeigen der Stellung der Verschlussvorrichtung auf. Über eine solche Anzeigeeinrichtung kann insbesondere angezeigt werden, ob die Verschlussvorrichtung sich in der Öffnungsstellung oder in der Schließstellung befindet. Eine solche Anzeigeeinrichtung kann beispielsweise durch eine farbliche Markierung zum Beispiel in einem Fenster des Basiselements des ersten Verschlussteils verwirklicht sein, wobei die farbliche Markierung die Stellung des zumindest einen Verschlusselements zu dem Basiselement anzeigt. In anderer Ausgestaltung kann eine solche Anzeigeeinrichtung beispielsweise durch ein Pin-Element verwirklicht sein, dass in der Öffnungsstellung eine erste Stellung zu dem Basiselement und in der Schließstellung eine andere, zweite Stellung zum Basiselement einnimmt und somit die Stellung der Verschlussvorrichtung eindeutig anzeigt.

Eine Verschlussvorrichtung der beschriebenen Art ist beispielsweise zum Herstellen einer Steckverbindung für elektrische oder elektronische Geräte verwendbar.

Zudem kann eine solche Verschlussvorrichtung für Taschen, Kleidungsstücke, Schuhe oder andere textile Baugruppen verwendet werden.

Die Verschlussvorrichtung kann zudem als Verschluss für einen Koffer oder als Sicherheitsverschluss zum Beispiel für eine Schwimmweste oder dergleichen zum Einsatz kommen. Beispielsweise kann die Verschlussvorrichtung für oder an Fahrzeugen oder für persönliche Schutzausrüstung verwendet werden.

Die Verschlussvorrichtung kann auch als Kopplung, zum Beispiel zum Verbinden mehrerer Behälter, zum Beispiel mehrerer Koffer oder Taschen, miteinander, eingesetzt werden.

Die Verschlussvorrichtung kann zudem zur Kopplung von elektrischen und elektronischen Geräten miteinander, zum Beispiel für eine Signalübertragung oder eine Stromversorgung, Verwendung finden.

Über die Verschlussvorrichtung kann auch ein hochbelastbarer Verschluss bereitgestellt werden, der zum Beispiel zur Verbindung eines Fahrzeugs mit einem Anhänger oder dergleichen Verwendung finden kann.

Die Verschlussvorrichtung kann zum Beispiel auch als Seil- oder Gurtverschluss verwendet werden.

Der der Erfindung zugrunde liegende Gedanke soll nachfolgend anhand der in den Figuren dargestellten Ausführungsbeispiele näher erläutert werden. Es zeigen:
- Fig. 1A: eine perspektivische Ansicht eines Ausführungsbeispiels einer Verschlussvorrichtung, in einer Öffnungsstellung;
- Fig. 1B: eine Ansicht der Verschlussvorrichtung gemäß Fig. 1A, in einer Schließstellung;
- Fig. 2: eine Explosionsansicht der Verschlussvorrichtung;
- Fig. 3A: eine Ansicht der Verschlussvorrichtung in der Öffnungsstellung;
- Fig. 3B: eine Ansicht der Verschlussvorrichtung beim Schließen;
- Fig. 3C: eine Ansicht der Verschlussvorrichtung beim weiteren Schließen;
- Fig. 3D: eine Ansicht der Verschlussvorrichtung beim weiteren Schließen;
- Fig. 3E: eine Ansicht der Verschlussvorrichtung in der Schließstellung;
- Fig. 4A: eine Draufsicht auf die Verschlussvorrichtung in der Öffnungsstellung;
- Fig. 4B: eine Seitenansicht der Verschlussvorrichtung;
- Fig. 4C: eine Frontalansicht der Verschlussvorrichtung;
- Fig. 4D: eine Schnittansicht entlang der Linie A-A gemäß Fig. 4A;
- Fig. 5A: eine Draufsicht auf die Verschlussvorrichtung in der Schließstellung;
- Fig. 5B: eine Seitenansicht der Verschlussvorrichtung;
- Fig. 5C: eine Frontalansicht der Verschlussvorrichtung;
- Fig. 5D: eine Schnittansicht entlang der Linie A-A gemäß Fig. 5A;
- Fig. 6A: eine Ansicht eines anderen Ausführungsbeispiels einer Verschlussvorrichtung, in einer Öffnungsstellung;
- Fig. 6B: eine Frontalansicht der Verschlussvorrichtung gemäß Fig. 6A;
- Fig. 6C: eine Draufsicht auf die Verschlussvorrichtung;
- Fig. 6D: eine Schnittansicht entlang der Linie B-B gemäß Fig. 6C;
- Fig. 7A: eine Ansicht der Verschlussvorrichtung, in einer Schließstellung;
- Fig. 7B: eine Frontalansicht der Verschlussvorrichtung gemäß Fig. 7A;
- Fig. 7C: eine Draufsicht auf die Verschlussvorrichtung;
- Fig. 7D: eine Schnittansicht entlang der Linie A-A gemäß Fig. 7C;
- Fig. 8A: eine Ansicht eines wiederum anderen Ausführungsbeispiels einer Verschlussvorrichtung, in einer Öffnungsstellung;
- Fig. 8B: eine Draufsicht auf die Verschlussvorrichtung;
- Fig. 8C: eine Schnittansicht entlang der Linie A-A gemäß Fig. 8B;
- Fig. 8D: eine Schnittansicht entlang der Linie B-B gemäß Fig. 8B;
- Fig. 9A: eine Ansicht der Verschlussvorrichtung, beim Schließen;
- Fig. 9B: eine Draufsicht auf die Verschlussvorrichtung;
- Fig. 9C: eine Schnittansicht entlang der Linie A-A gemäß Fig. 9B;
- Fig. 9D: eine Schnittansicht entlang der Linie B-B gemäß Fig. 9B;
- Fig. 10A: eine Ansicht der Verschlussvorrichtung, beim weiteren Schließen;
- Fig. 10B: eine Draufsicht auf die Verschlussvorrichtung;
- Fig. 10C: eine Schnittansicht entlang der Linie A-A gemäß Fig. 10B;
- Fig. 10D: eine Schnittansicht entlang der Linie B-B gemäß Fig. 10B;
- Fig. 11A: eine Ansicht der Verschlussvorrichtung, beim weiteren Schließen;
- Fig. 11B: eine Draufsicht auf die Verschlussvorrichtung;
- Fig. 11C: eine Schnittansicht entlang der Linie A-A gemäß Fig. 11B;
- Fig. 11D: eine Schnittansicht entlang der Linie B-B gemäß Fig. 11B;
- Fig. 12A: eine Ansicht der Verschlussvorrichtung, in der Schließstellung;
- Fig. 12B: eine Draufsicht auf die Verschlussvorrichtung;
- Fig. 12C: eine Schnittansicht entlang der Linie A-A gemäß Fig. 12B;
- Fig. 12D: eine Schnittansicht entlang der Linie B-B gemäß Fig. 12B;
- Fig. 13: eine Explosionsansicht der Verschlussvorrichtung gemäß Fig. 8A bis 12D;
- Fig. 14A: eine Ansicht eines wiederum anderen Ausführungsbeispiels einer Verschlussvorrichtung, in einer Öffnungsstellung;
- Fig. 14B: eine Draufsicht auf die Verschlussvorrichtung;
- Fig. 15A: eine Ansicht der Verschlussvorrichtung, in einer Schließstellung;
- Fig. 15B: eine Draufsicht auf die Verschlussvorrichtung;
- Fig. 16A: eine Ansicht eines wiederum anderen Ausführungsbeispiels einer Verschlussvorrichtung, in einer Öffnungsstellung;
- Fig. 16B: eine Draufsicht auf die Verschlussvorrichtung;
- Fig. 16C: eine Schnittansicht entlang der Linie A-A gemäß Fig. 16B;
- Fig. 17A: eine Ansicht der Verschlussvorrichtung, in einer Schließstellung;
- Fig. 17B: eine Draufsicht auf die Verschlussvorrichtung;
- Fig. 17C: eine Schnittansicht entlang der Linie A-A gemäß Fig. 17B;
- Fig. 18A: eine Ansicht eines wiederum anderen Ausführungsbeispiels Verschlussvorrichtung, in einer Öffnungsstellung;
- Fig. 18B: eine Draufsicht auf die Verschlussvorrichtung;
- Fig. 19A: eine Ansicht der Verschlussvorrichtung, in einer Schließstellung;
- Fig. 19B: eine Draufsicht auf die Verschlussvorrichtung;
- Fig. 20A: eine Ansicht eines wiederum anderen Ausführungsbeispiels einer Verschlussvorrichtung, in einer Öffnungsstellung;
- Fig. 20B: eine Draufsicht auf die Verschlussvorrichtung;
- Fig. 21A: eine Ansicht der Verschlussvorrichtung, in einer Schließstellung;
- Fig. 21B: eine Draufsicht auf die Verschlussvorrichtung;
- Fig. 22A: eine Ansicht eines wiederum anderen Ausführungsbeispiels einer Verschlussvorrichtung, in einer Öffnungsstellung;
- Fig. 22B: eine Draufsicht auf die Verschlussvorrichtung;
- Fig. 22C: eine Schnittansicht entlang der Linie A-A gemäß Fig. 22B;
- Fig. 22D: eine Seitenansicht der Verschlussvorrichtung;
- Fig. 22E: eine Schnittansicht entlang der Linie A-A gemäß Fig. 22D;
- Fig. 23A: eine Ansicht der Verschlussvorrichtung, bei der an dem ersten Verschlussteil ein Gehäuseteil entfernt ist;
- Fig. 23B: eine Draufsicht auf die Anordnung gemäß Fig. 23A;
- Fig. 24A: eine Ansicht der Verschlussvorrichtung, in einer Schließstellung;
- Fig. 24B: eine Draufsicht auf die Verschlussvorrichtung;
- Fig. 24C: eine Schnittansicht entlang der Linie A-A gemäß Fig. 24B;
- Fig. 24D: eine Seitenansicht der Verschlussvorrichtung;
- Fig. 24E: eine Schnittansicht entlang der Linie A-A gemäß Fig. 24D;
- Fig. 25A: eine Ansicht der Verschlussvorrichtung, bei der an dem ersten Verschlussteil ein Gehäuseteil entfernt ist;
- Fig. 25B: eine Draufsicht auf die Anordnung gemäß Fig. 25A;
- Fig. 26A: eine Explosionsansicht eines weiteren Ausführungsbeispiels einer Verschlussvorrichtung;
- Fig. 26B: eine andere Explosionsansicht der Verschlussvorrichtung; und
- Fig. 27: eine schematische Ansicht einer elektrischen Kontaktierung zwischen Verschlussteilen.

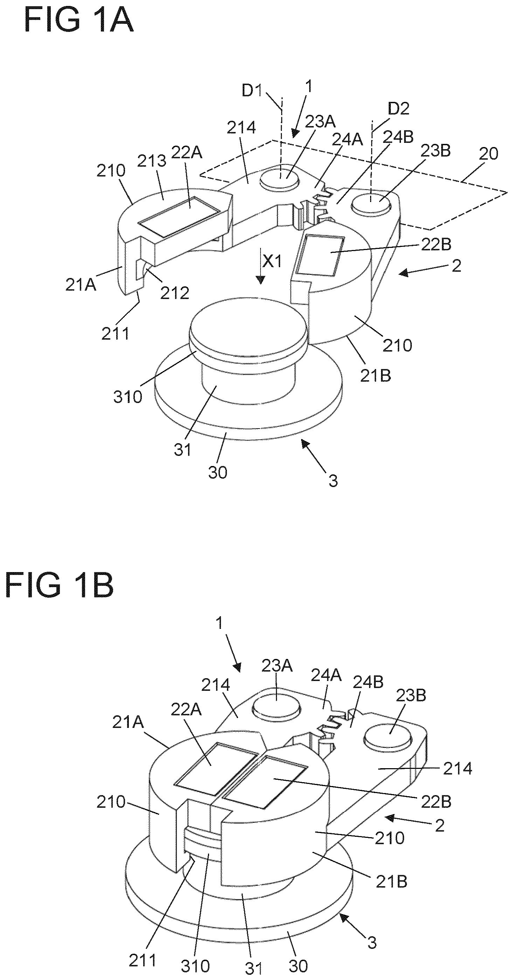

Fig. 1A, 1B bis Fig. 5A-5D zeigen ein erstes Ausführungsbeispiel einer Verschlussvorrichtung 1, die zwei Verschlussteile 2, 3 aufweist, die entlang einer Schließrichtung X1 aneinander angesetzt werden können und in einer Schließstellung mechanisch miteinander verriegelt sind, sodass den Verschlussteilen 2, 3 zugeordnete Baugruppen über die Verschlussteile 2, 3 miteinander verbunden sind.

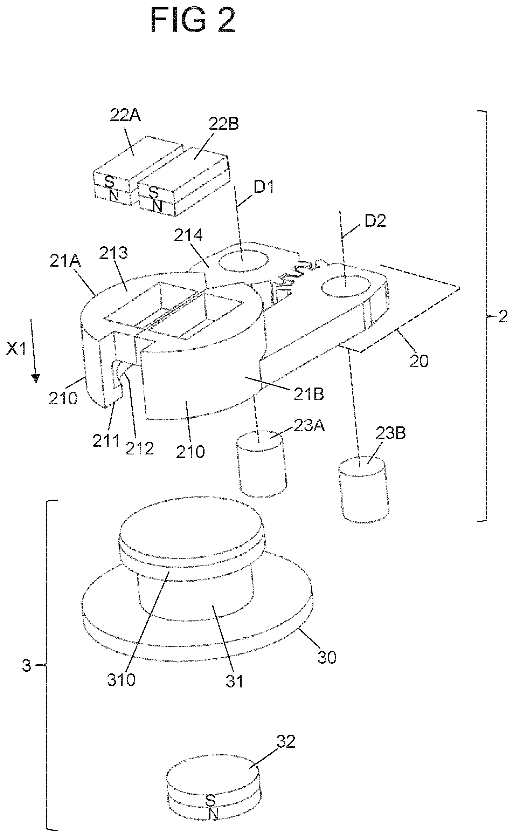

Unter Bezugnahme zunächst auf die Explosionsansicht gemäß Fig. 2 weist das Verschlussteil 2 ein Basiselement in Form eines Gehäuseelements 20 auf, an dem zwei Verschlusselemente 21A, 21B über Achselemente 23A, 23B verschwenkbar gelagert sind. Die Verschlusselemente 21A, 21B weisen jeweils einen Klauenabschnitt 210 in Form einer Halbschale auf, die gemeinsam dazu dienen, eine Verriegelung mit einem Eingriffselement 31 des Verschlussteils 3 herzustellen.

So bilden die Klauenabschnitte 210 jeweils einen Formschlussabschnitt 211 aus, der entlang eines Kreisbogens näherungsweise halbkreisförmig um die Schließrichtung X1 erstreckt ist und mit einem inneren Randabschnitt 212 dem Eingriffselement 31 des Verschlussteils 3 angenähert werden kann. An einem dem Formschlussabschnitt 211 abgewandten, axial entlang der Schließrichtung X1 zu dem Formschlussabschnitt 211 beabstandeten Wandungsabschnitt 213 ist in jedem der Verschlusselemente 21A, 21B je ein Magnetelement 22A, 22B angeordnet. Über je einen Schaftabschnitt 214 sind die Verschlusselemente 21A, 21B mit den Achselementen 23A, 23B gekoppelt und darüber schwenkbar an dem Gehäuseelement 20 gelagert, sodass die Verschlusselemente 21A, 21B zu dem Gehäuseelement 20 und zudem zueinander verschwenkbar sind.

Bei dem dargestellten Ausführungsbeispiel sind durch die Achselemente 23A, 23B vorgegebene Schwenkachsen D1, D2 entlang der Schließrichtung X1 gerichtet. Die Schwenkachsen D1, D2 sind hierbei quer zur Schließrichtung X1 zu dem Eingriffselement 31 des Verschlussteils 3 (insbesondere zu einer Rotationssymmetrieachse des Eingriffselements 31) beabstandet, sodass die Klauenabschnitte 210 mit den daran geformten Formschlussabschnitten 211 in einer senkrecht zur Schließrichtung X1 gerichteten Ebene quer zur Schließrichtung X1 mit einem an dem Eingriffselement 31 geformten Eingriffsabschnitt 310 des Verschlussteils 3 in Eingriff gebracht werden können.

Angmerkt sei, dass die Schwenkachsen D1, D2 in einer anderen Ausgestaltung aber auch in einem anderen Verhältnis zur Schließrichtung angeordnet sein können. So ist in einer weiteren Ausführung denkbar, dass diese sich in einer Ebene erstrecken, die senkrecht zur Schließrichtung steht oder schräg zur Schließrichtung gerichtet ist.

Im Bereich der Achselemente 23A, 23B ist an jedem Schaftabschnitt 214 eine Kopplungseinrichtung 24A, 24B in Form eines Verzahnungsabschnitts geformt. Durch Verzahnungseingriff der Verzahnungsabschnitte miteinander sind die Verschlusselemente 21A, 21B miteinander zwangsgekoppelt, sodass ein Verschwenken des einen Verschlusselements 21A, 21B stets mit einem synchronen, aber entgegen gerichteten Verschwenken des anderen Verschlusselements 21B, 21A einhergeht.

Das Verschlussteil 3 weist einen Grundkörper 30 auf, an dem das Eingriffselement 31 angeordnet ist. Ein Magnetelement 32 ist in dem Eingriffselement 31 eingefasst und dient zum magnetischen Zusammenwirken mit den Magnetelementen 22A, 22B der Verschlusselemente 21A, 21B.

Die Magnetelemente 22A, 22B der Verschlusselemente 21A, 21B können durch Permanentmagnete oder durch magnetische Anker oder Elektromagneten ausgestaltet sein. Ebenso kann das Magnetelement 32 des Verschlussteils 3 durch einen Permanentmagneten oder einen magnetischen Anker ausgestaltet sein, wobei zumindest eins der Magnetelemente 22A, 22B, 32 durch einen Permanentmagneten oder Elektromagneten gebildet ist.

Bei dem dargestellten Ausführungsbeispiel sind die Magnetelemente 22A, 22B, 32 zum Beispiel durch je einen Permanentmagneten gebildet. Die Magnetelemente 22A, 22B der Verschlusselemente 21A, 21B sind hierbei gleichgerichtet zueinander angeordnet und weisen beispielsweise mit gleichnamigen Polen hin zu dem Eingriffselement 31 des Verschlussteils 3, wie dies in Fig. 2 dargestellt ist, sodass zwischen den Magnetelementen 22A, 22B eine magnetische Abstoßung quer zur Schließrichtung X1 besteht. Das Magnetelement 32 ist demgegenüber mit einem ungleichnamigen Pol hin zu den Magnetpolen der Magnetelemente 22A, 22B gerichtet, sodass zwischen den Magnetelementen 22A, 22B einerseits und dem Magnetelement 32 eine magnetische Anziehungskraft besteht.

Bei dem dargestellten Ausführungsbeispiel sind, die Magnetisierungsrichtungen der Magnetelemente 22A, 22B (entsprechend dem Richtungsvektor vom Nordpol N hin zum Südpol S) gleichgerichtet und dabei parallel zur Schließrichtung gerichtet (siehe Fig. 2). Zwischen den Magnetelementen 22A, 22B besteht somit eine magnetische Abstoßung quer zur Schließrichtung X1. Die Magnetelemente 22A, 22B können aber auch mit gleichnamigen Polen zueinander hinweisen, sodass die Magnetisierungsrichtungen der Magnetelemente 22A, 22B senkrecht zur Schließrichtung X1 und entgegengesetzt zueinander gerichtet sind.

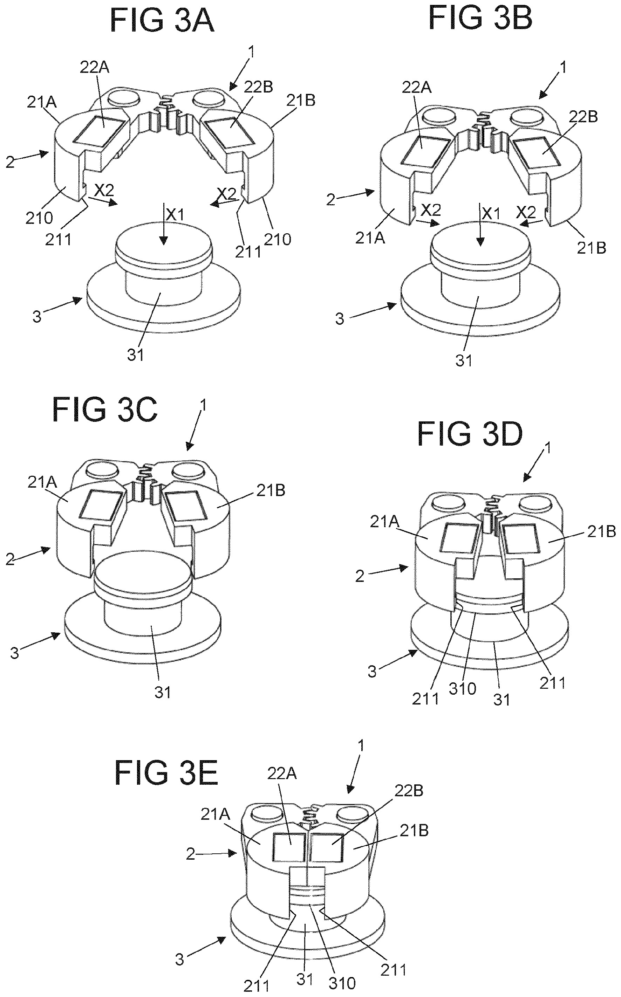

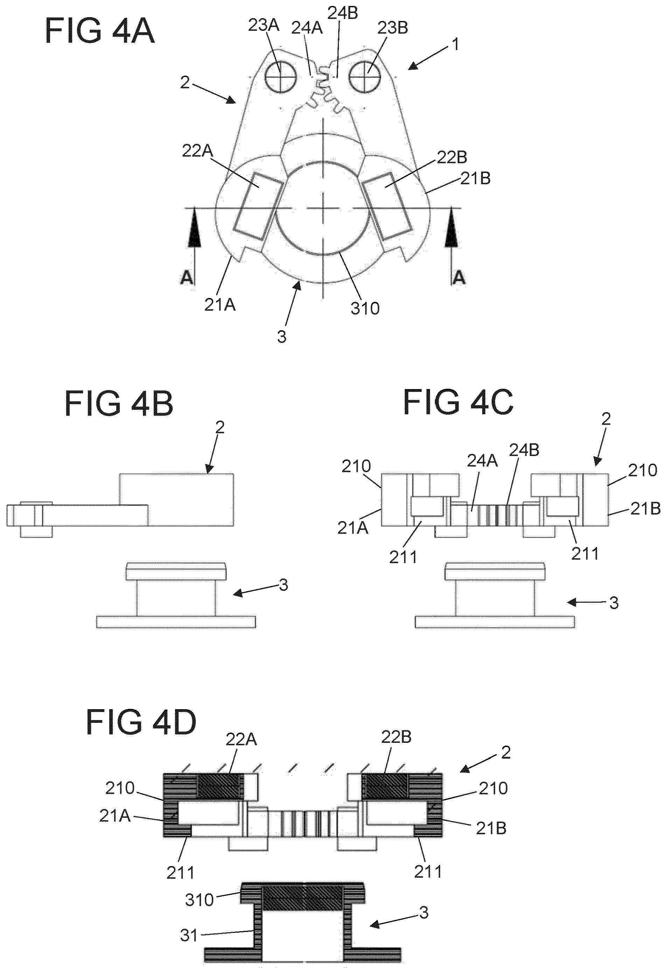

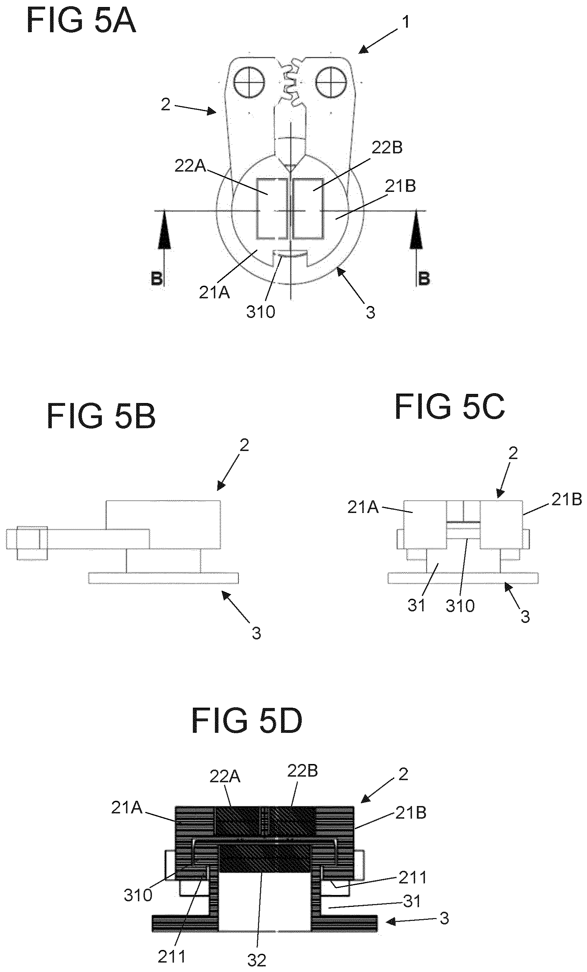

Fig. 3A bis 3E zeigen die Verschlussvorrichtung 1 beim Schließen. Fig. 4A bis 4D zeigen Ansichten der Verschlussrichtung 1 in einer Öffnungsstellung vor dem Schließen. Fig. 5A bis 5D zeigen Ansichten in der Schließstellung nach dem Schließen.

Werden zum Schließen der Verschlussvorrichtung 1 die Verschlussteile 2, 3 entlang der Schließrichtung X1 aneinander angesetzt, so werden die Verschlusselemente 21A, 21B dem Eingriffselement 31 angenähert. In der Öffnungsstellung vor dem Schließen, dargestellt in Fig. 3A sowie Fig. 4A bis 4D, befinden sich die Verschlusselemente 21A, 21B hierbei in einer ersten, geöffneten Position, in der die Klauenabschnitte 210 entgegengesetzt zu einer quer zur Schließrichtung X1 gerichteten Eingriffsrichtung X2 voneinander beabstandet sind. In dieser Öffnungsstellung werden die Verschlusselemente 21A, 21B bei dem dargestellten Ausführungsbeispiel aufgrund der magnetisch abstoßenden Wirkungen zwischen den Magnetelementen 22A, 22B der Verschlusselemente 21A, 21B gehalten.

Beim Annähern der Verschlusselemente 21A, 21B an das Eingriffselement 31 wird die magnetische Anziehung zwischen den Magnetelementen 22A, 22B einerseits und dem Magnetelement 32 andererseits immer stärker, sodass die Verschlusselemente 21A, 21B entgegen der magnetischen Abstoßung zwischen den Magnetelementen 21A, 21B zueinander hin gezogen werden. Sind die Verschlusselemente 21A, 21B hinreichend weit dem Eingriffselement 31 angenähert worden, wie dies im Übergang von Fig. 3B hin zu Fig. 3E ersichtlich ist, so übersteigt die magnetische Anziehungskraft von dem Magnetelement 32 auf die Magnetelemente 22A, 22B die magnetische Abstoßung zwischen den Magnetelementen 22A, 22B untereinander, sodass die Verschlusselemente 21A, 21B in die Eingriffsrichtung X2 quer zur Schließrichtung X1 in Anlage miteinander gebracht sind und dadurch die Formschlussabschnitte 211 innen an den Klauenabschnitten 210 der Verschlusselemente 21A, 21B in Eingriff mit dem Eingriffsabschnitt 310 des Eingriffselements 31 sind, wie dies aus Fig. 3E in Zusammenschau mit Fig. 5A bis 5D ersichtlich ist.

Die Verschlussteile 2, 3 sind somit in der Schließstellung formschlüssig miteinander verbunden und dadurch, dass die Verschlusselemente 21A, 21B mit ihren Klauenabschnitten 210 das Eingriffselement 31 im Bereich des Eingriffsabschnitts 310 formschlüssig umgreifen, belastbar aneinander gehalten.

Bei dem dargestellten Ausführungsbeispiel sind die Formschlussabschnitte 211 als starre nach innen vorspringende Vorsprünge im Inneren der Klauenabschnitte 210 geformt. Der Eingriffsabschnitt 310 am Eingriffselement 31 ist als radial vorspringender, umfänglich um die Schließrichtung X1 umlaufender Vorsprungsabschnitt an dem Eingriffselement 31 geformt.

Aufgrund der Zwangskopplung über die Kopplungseinrichtungen 24A, 24B erfolgt die Schwenkbewegung der Verschlusselemente 21A, 21B beim Schließen stets synchron. Die Formschlussabschnitte 211 werden somit in synchroner Weise und somit gleichförmig mit dem Eingriffsabschnitt 310 des Eingriffselements 31 in Eingriff gebracht, sodass die Verriegelung zwischen den Verschlussteilen 2, 3 sicher und zuverlässig hergestellt wird.

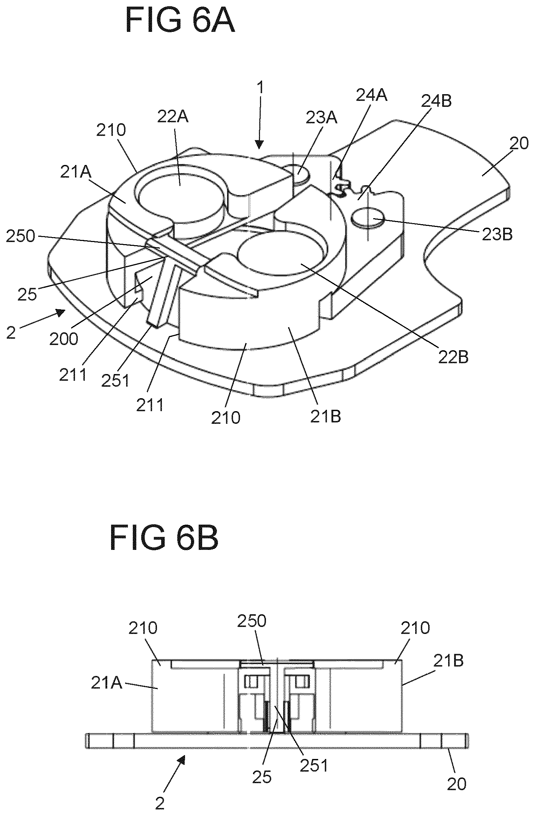

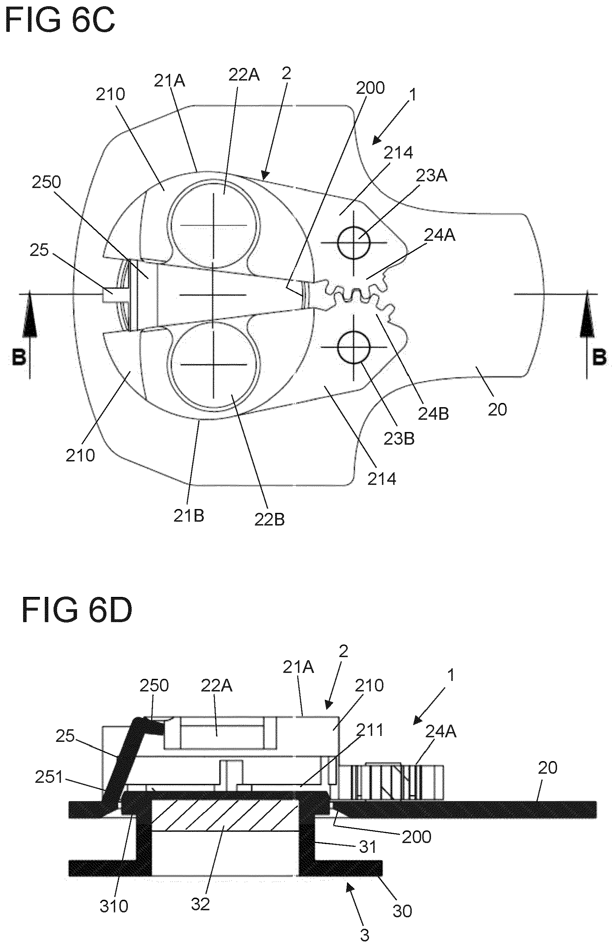

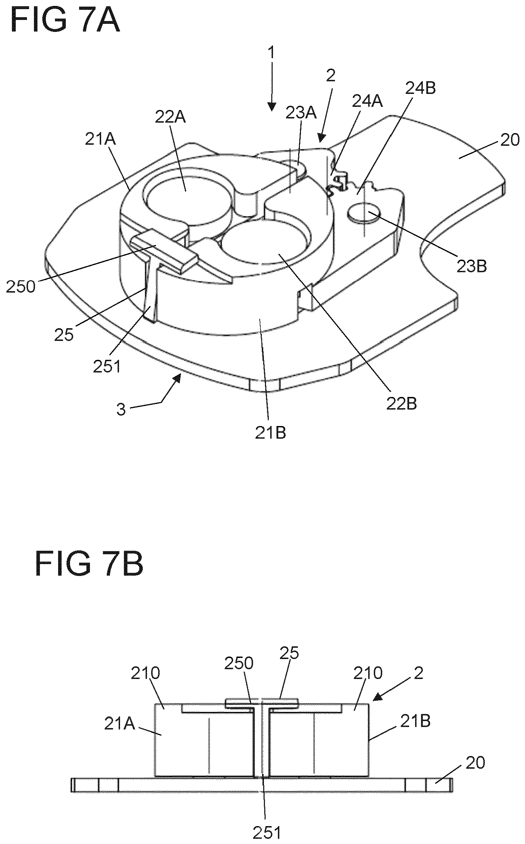

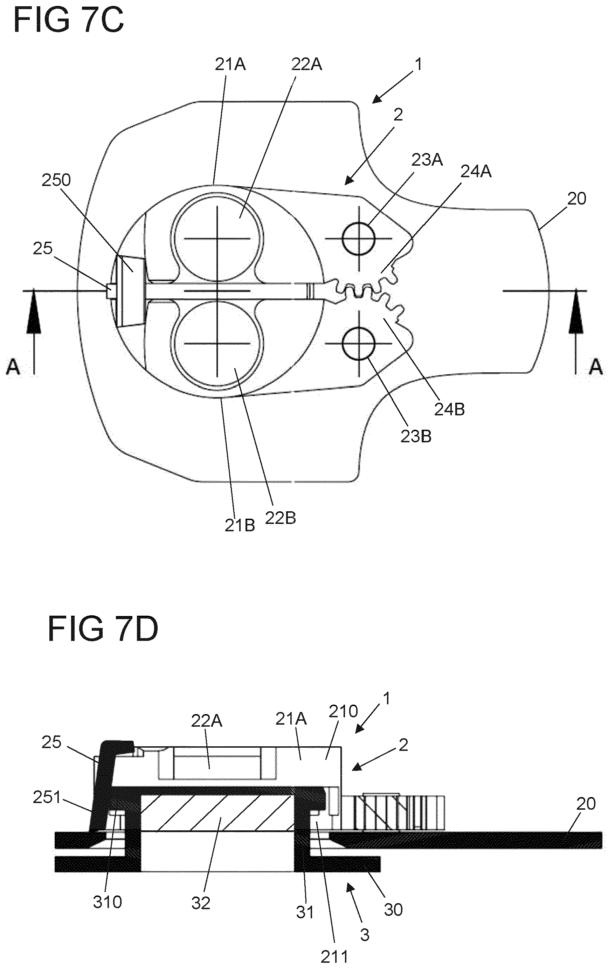

Bei einem in Fig. 6A-6D und 7A-7D dargestellten Ausführungsbeispiel weist das Verschlussteil 2 zusätzlich ein Sperrelement 25 in Form eines elastisch verstellbaren Elements auf, zum Beispiel in Form eines Federelements, das in der Öffnungsstellung zwischen den Verschlusselementen 21A, 21B einliegt und diese somit in der Öffnungsstellung sperrt. Das Sperrelement 25 bildet einen Sperrabschnitt 250 in Form eines quer zur Schließrichtung X1 erstreckten Balkens auf, der die Verschlusselemente 21A, 21B in der Öffnungsstellung mit Abstand zueinander hält. Über einen Auslöseabschnitt 251 ist das Sperrelement 25 an dem Gehäuseelement 20 des Verschlussteils 2 festgelegt, wobei der Auslöseabschnitt 251 elastisch verformbar ist und somit das Sperrelement 25 zum Entsperren verstellt werden kann.

Wie dies insbesondere aus der Schnittansicht gemäß Fig. 6D ersichtlich ist, ragt der Auslöseabschnitt 251 in einen Bereich im Inneren der Klauenabschnitte 210 hinein, in den das Verschlussteil 3 mit dem Eingriffselement 31 beim Schließen der Verschlussvorrichtung 1 eingeführt wird. Beim Schließen wirkt das Verschlussteil 3 somit mit dem Auslöseabschnitt 251 zusammen und verstellt dadurch das Sperrelement 25 radial nach außen, sodass der Sperrabschnitt 150 aus einer Stellung zwischen den Verschlusselementen 21A, 21B gebracht wird, wie dies im Übergang von Fig. 6A-6D (darstellend die Öffnungsstellung) hin zu Fig. 7A-7D (darstellend die Schließstellung) ersichtlich ist.

Ist das Sperrelement 25 aus seiner Zwischenlage zwischen den Verschlusselementen 21A, 21B gebracht worden, werden die Verschlusselemente 21A, 21B aufgrund der magnetischen Wechselwirkung mit dem Magnetelement 32 des Eingriffselements 31 zueinander hin gezogen und gelangen somit in die verriegelnde Stellung, in der die Verschlussteile 2, 3 miteinander verbunden sind.

Durch das Sperrelement 25 kann insbesondere sichergestellt werden, dass die Verschlusselemente 21A, 21B zum Herstellen des Eingriffs mit dem Eingriffselement 31 erst zueinander hin gezogen werden, wenn das Eingriffselement 31 hinreichend weit in eine Öffnung 200 des Gehäuseelements 20 eingesetzt worden ist, sodass die Verriegelung zwischen den Verschlusselementen 21A, 21B und dem Eingriffsabschnitt 310 des Eingriffselements 31 sicher und zuverlässig hergestellt werden kann. Einer Fehlverriegelung kann auf diese Weise entgegengewirkt werden.

Ansonsten ist das Ausführungsbeispiel gemäß Fig. 6A-6D und 7A-7D funktional identisch dem vorangehend anhand von Fig. 1 bis 5D beschriebenen Ausführungsbeispiel, sodass auch auf die vorangehenden Ausführungen verwiesen werden soll.

Bei den vorangehend beschriebenen Ausführungsbeispielen kann die Verschlussvorrichtung 1 dadurch wieder geöffnet werden, dass ein Nutzer auf die Verschlusselemente 21A, 21B einwirkt und diese beispielsweise entgegen der Eingriffsrichtung X2 auseinander zieht. Dies kann händisch oder über einen geeigneten Betätigungsmechanismus erfolgen, zum Beispiel in Form eines Gestänges, eines Hebelgetriebes, eines Exzenterelements oder einen anderen Mechanismus.

Denkbar ist auch, dass zum Öffnen beispielsweise eine Polung des Magnetelements 32 durch mechanisches Verdrehen des Magnetelements 32 umgekehrt wird. So kann das Magnetelement 32 beispielsweise so verdrehbar sein, dass anstelle des Südpols S (siehe Fig. 2) ein Nordpol N hin zu den Magnetelementen 22A, 22B der Verschlusselemente 21A, 21B weist, sodass die magnetische Anziehung in eine magnetische Abstoßung zwischen dem Magnetelement 32 und den Magnetelementen 22A, 22B umgekehrt wird. Auf diese Weise öffnen sich die Verschlusselemente 21A, 21B magnetisch, und die Verriegelung wird aufgehoben.

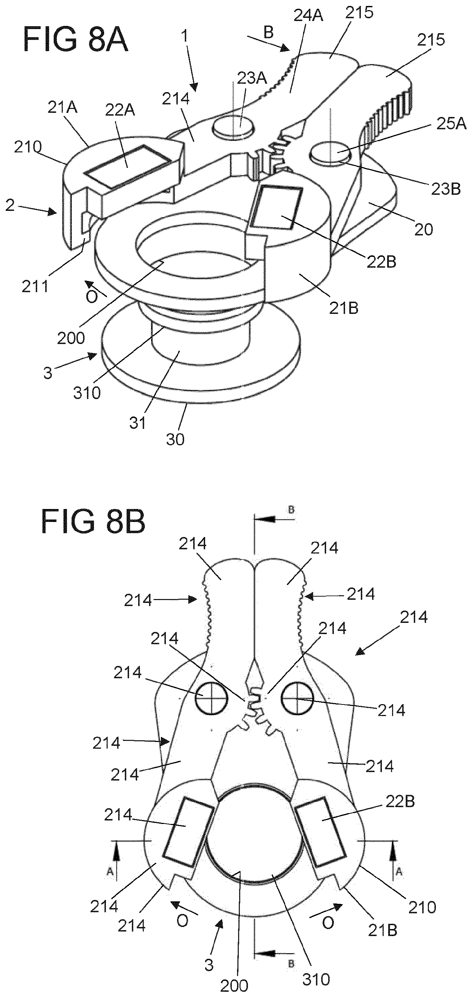

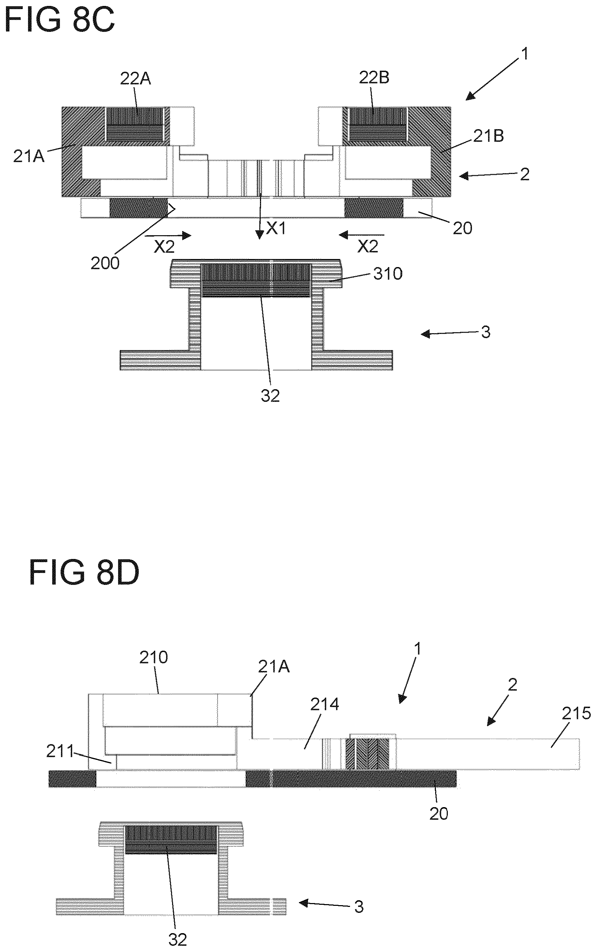

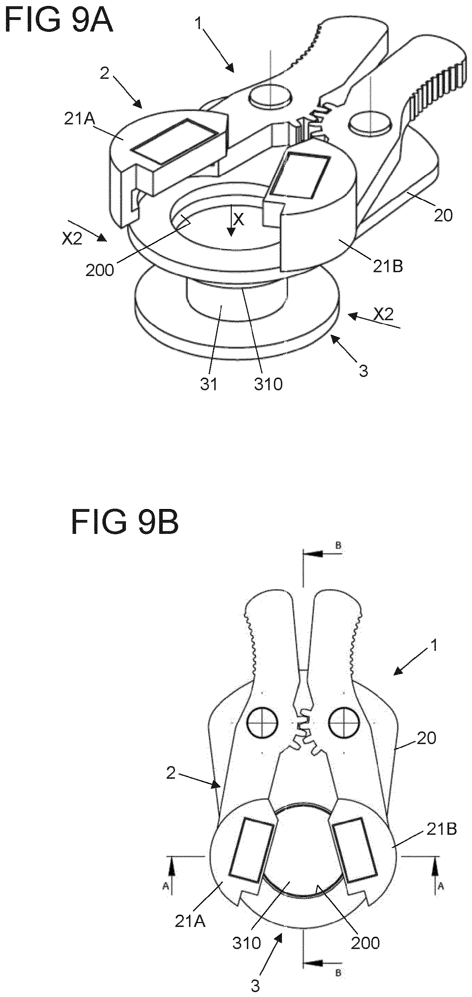

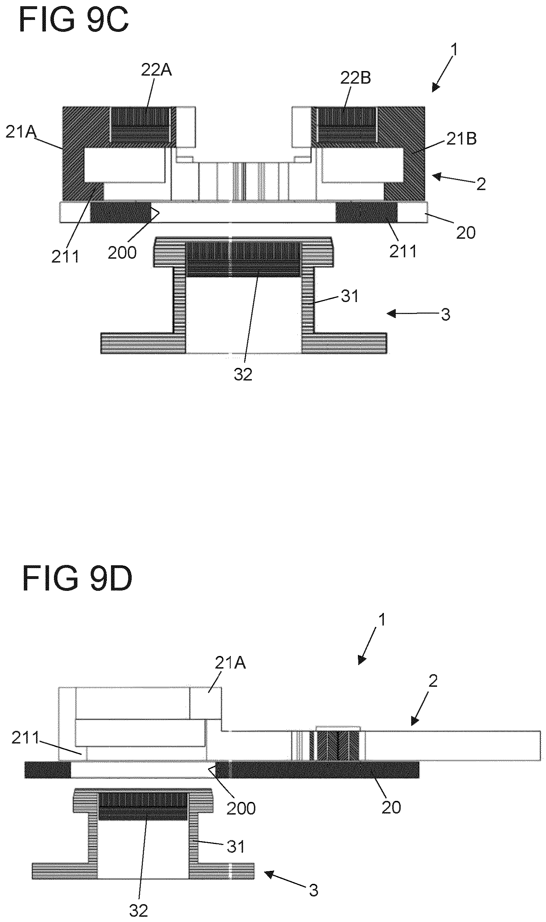

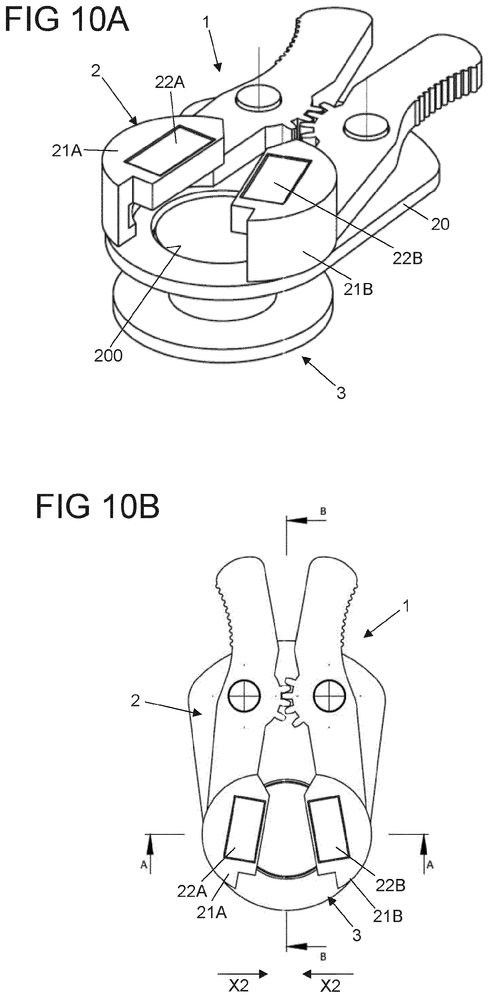

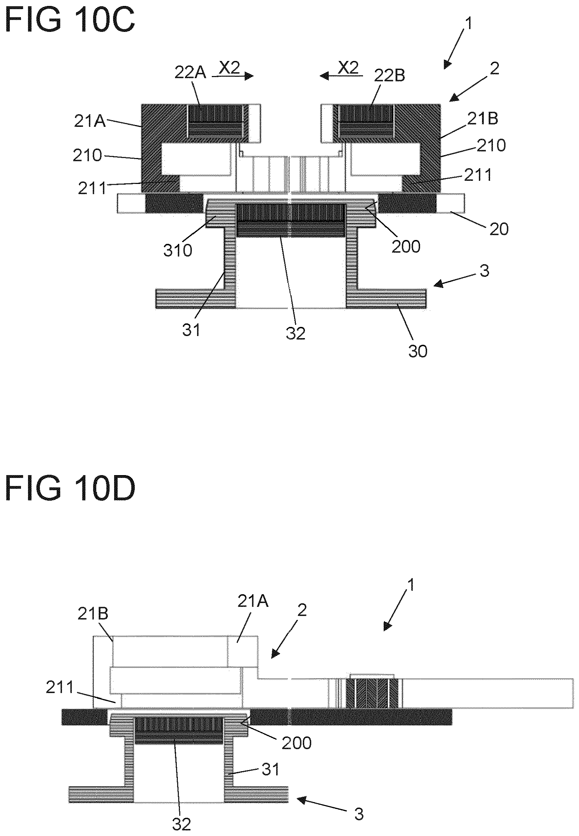

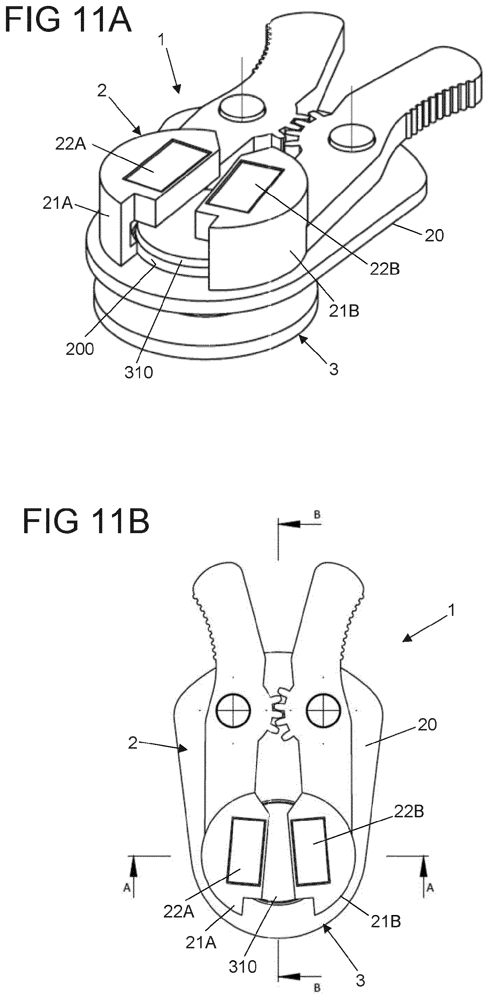

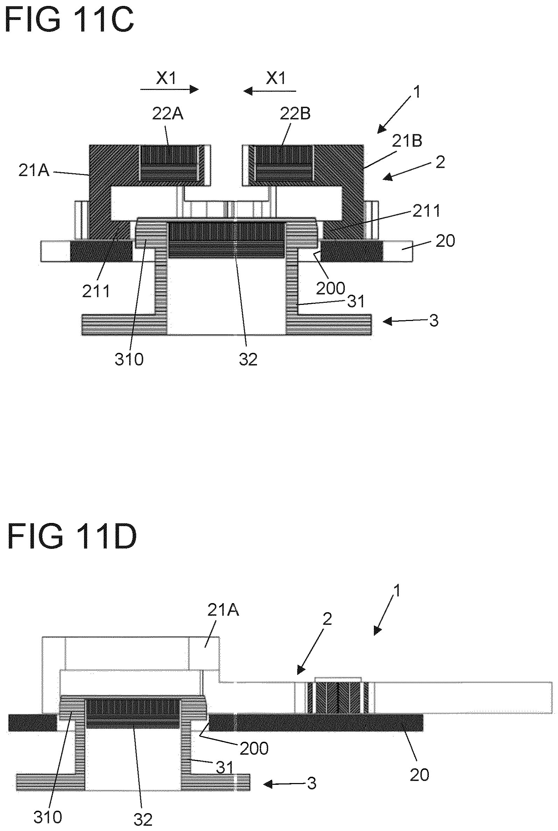

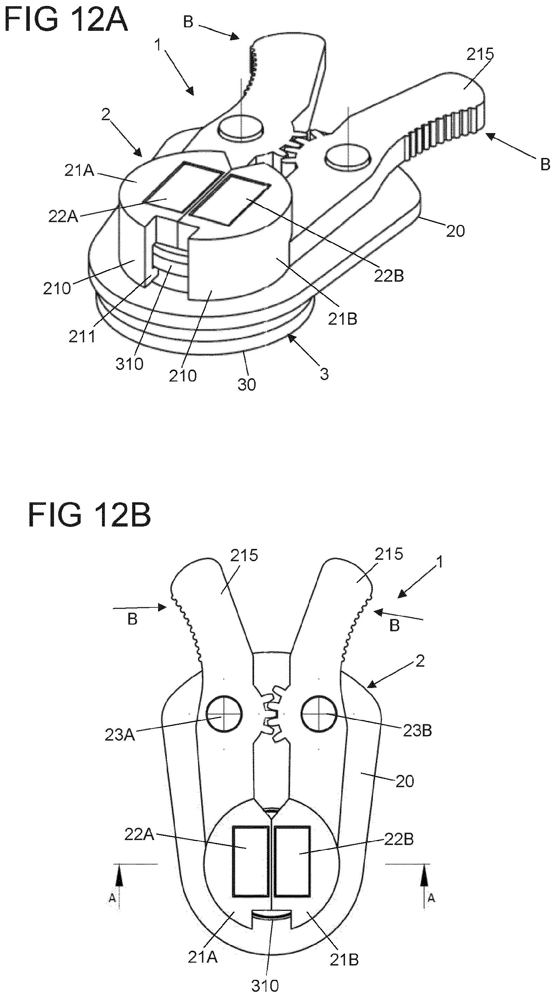

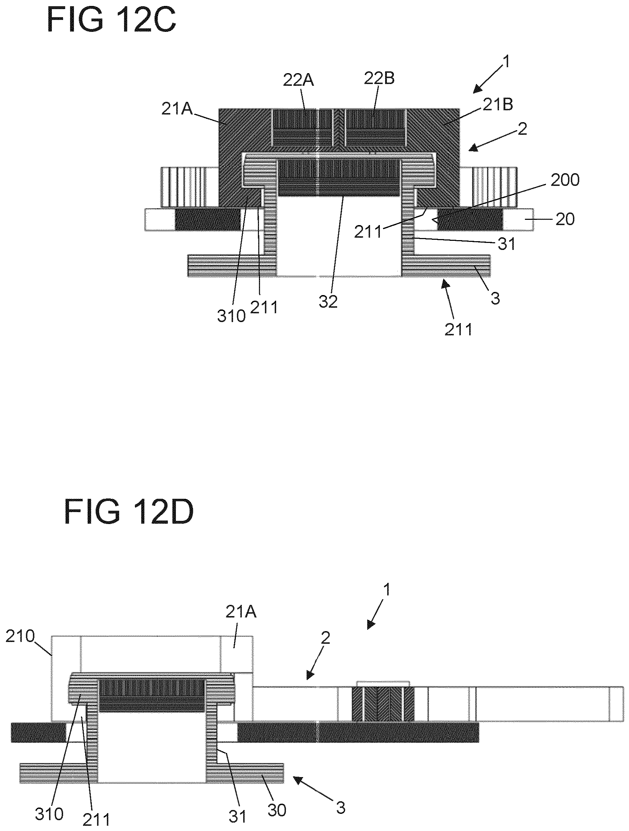

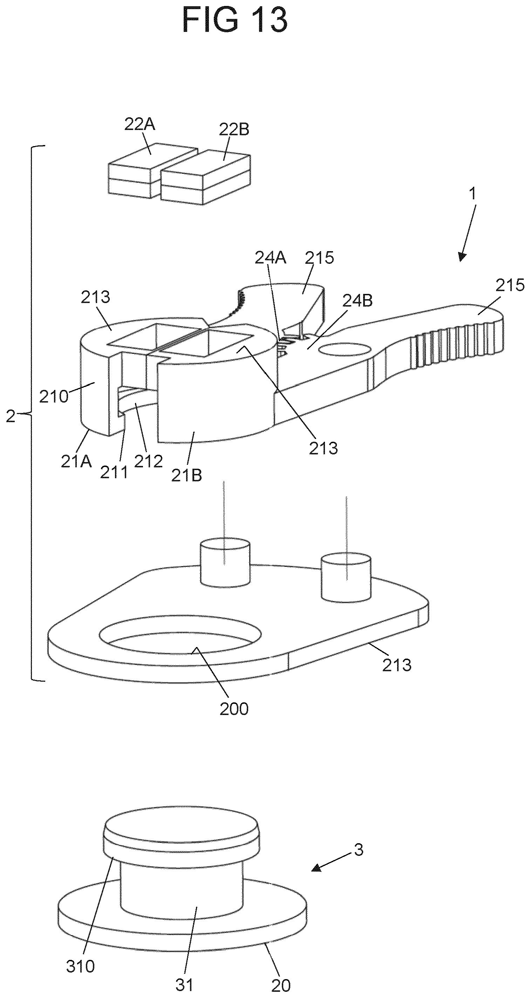

Bei einem in Fig. 8A-8D bis Fig. 13 dargestellten Ausführungsbeispiel weisen die Verschlusselemente 21A, 21B jeweils einen Betätigungsabschnitt 215 in Form eines Hebelabschnitts auf, der an einem von dem jeweiligen Klauenabschnitt 210 abgewandten Hebelende des jeweiligen Verschlusselements 21A, 21B geformt ist und durch einen Nutzer händisch betätigt werden kann. Durch Einwirken auf die Betätigungsabschnitte 215 in eine Betätigungsrichtung B (siehe zum Beispiel Fig. 12A und 12B) kann ein Nutzer die Verschlusselemente 21A, 21B so zu dem Gehäuseelement 20 und zueinander verstellen, dass die Klauenabschnitte 210 der Verschlusselemente 21A, 21B voneinander entfernt werden und somit das Eingriffselement 31 aus der Schließstellung freigegeben wird, sodass die Verschlussteile 2, 3 voneinander getrennt werden können. Durch Einwirken auf die Betätigungsabschnitte 215 kann die Verschlussvorrichtung 1 somit geöffnet und aus der Schließstellung (Fig. 12A-12D) in die Öffnungsstellung (Fig. 8A-8D) überführt werden.

Ansonsten ist das Ausführungsbeispiel gemäß Fig. 8A bis 13 funktional identisch den vorangehend beschriebenen Ausführungsbeispielen, sodass auch auf die vorangehenden Ausführungen verwiesen werden soll.

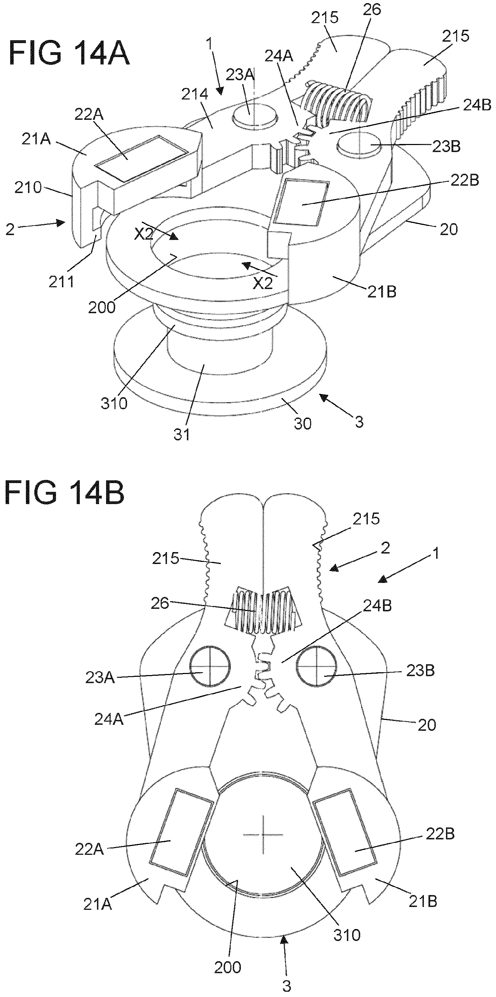

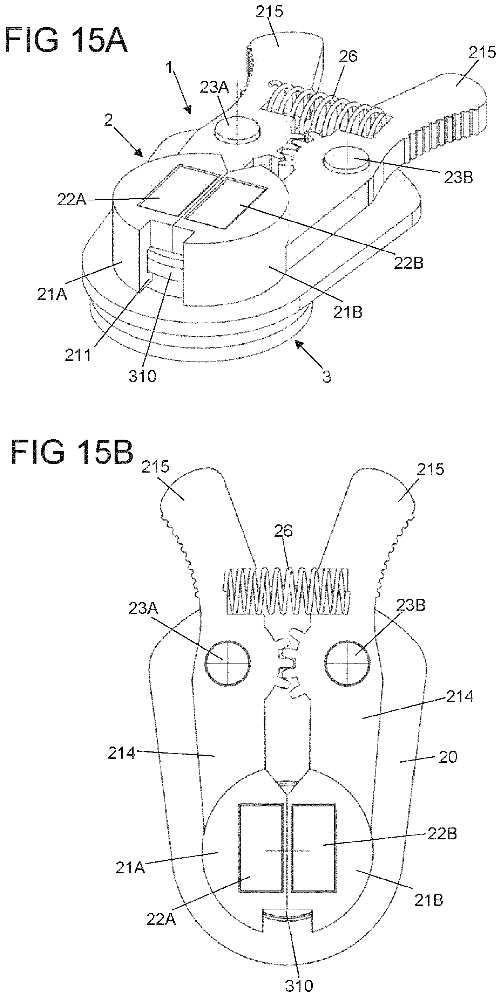

Bei einem in Fig. 14A, 14B und 15A, 15B dargestellten Ausführungsbeispiel ist zusätzlich ein Vorspannelement 26 in Form einer mechanischen Feder zwischen den Verschlusselementen 21A, 21B angeordnet, das dazu dient, eine mechanische Vorspannung zwischen den Verschlusselementen 21A, 21B in die Eingriffsrichtung X2 zu bewirken.

Das Vorspannelement 26 wirkt zwischen den Betätigungsabschnitten 215 und ist als Druckfeder ausgebildet. Die durch das Vorspannelement 26 bewirkte Vorspannkraft steigt hierbei (zumindest näherungsweise) linear mit Entfernung der Klauenabschnitte 210 entgegen der Eingriffsrichtung X2 voneinander an.

Das Vorspannelement 26 dient in Zusammenwirken mit der magnetischen Abstoßung zwischen den Magnetelementen 22A, 22B dazu, eine definierte Öffnungslage der Verschlusselemente 21A, 21B einzustellen. In der Öffnungsstellung nehmen die Verschlusselemente 21A, 21B eine Position zueinander ein, in der die magnetische Abstoßung zwischen den Magnetelementen 22A, 22B und die (entgegen gerichtete) Vorspannkraft des Vorspannelement 26 im Gleichgewicht sind, sodass sich die abstoßende Kraft der Magnetelemente 22A, 22B entgegen der Eingriffsrichtung X2 und die vorspannende Kraft des Vorspannelements 26 in die Eingangsrichtung X2 gerade ausgleichen.

Ein solches Vorspannelement 26 kann insbesondere auch vorteilhaft sein, wenn ein Sperrelement 25, wie bei dem Ausführungsbeispiel gemäß Fig. 6A-6D und 7A-7D, verwendet wird. Zum Öffnen können die Verschlusselemente 21A, 21B mit ihren Klauenabschnitten 210 so weit voneinander entfernt werden, dass das Sperrelement 25 aufgrund seiner Eigenelastizität in die Sperrstellung gemäß Fig. 6A-6D gelangt. Aufgrund der vorspannenden Kraft des Vorspannelements 26 gelangen die Verschlusselemente 21A, 21B dann in eine Stellung in Anlage mit dem Sperrelement 25, sodass die Verschlussvorrichtung 1 beim erneuten Ansetzen der Verschlussteile 2, 3 in zuverlässiger Weise wieder geschlossen werden kann.

Bei Vorsehen eines solchen Sperrelements 25 können die Magnetelemente 22A, 22B gegebenenfalls auch so ausgestaltet sein, dass keine magnetische Abstoßung zwischen den Verschlusselementen 21A, 21B besteht. Beispielsweise können die Magnetelemente 22A, 22B jeweils durch einen (passiven) magnetischen Anker ausgestaltet sein, sodass die Magnetelemente 22A, 22B magnetisch anziehend mit dem Magnetelement 32 des Verschlussteils 3 zusammenwirken, nicht aber magnetisch miteinander wechselwirken, insbesondere nicht abstoßend. Ein Offenhalten der Verschlusselemente 21A, 21B wird in diesem Fall durch das Sperrelement 25 bewirkt, das ein Zueinanderhinbewegen der Verschlusselemente 21A, 21B in der Öffnungsstellung der Verschlussvorrichtung 1 verhindert.

Ansonsten entspricht das Ausführungsbeispiel gemäß Fig. 14A, 14B und 15A, 15B dem Ausführungsbeispiel gemäß Fig. 8A bis 13.

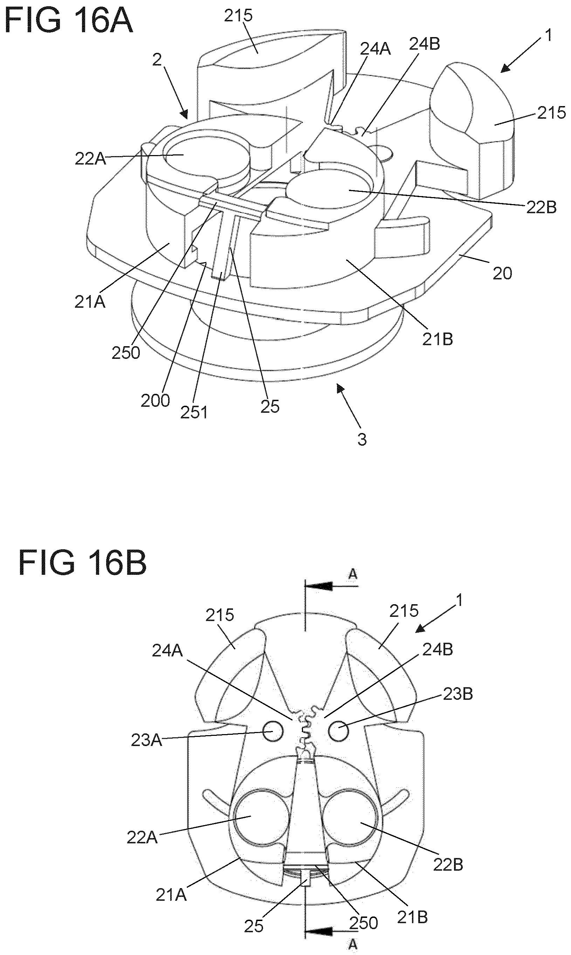

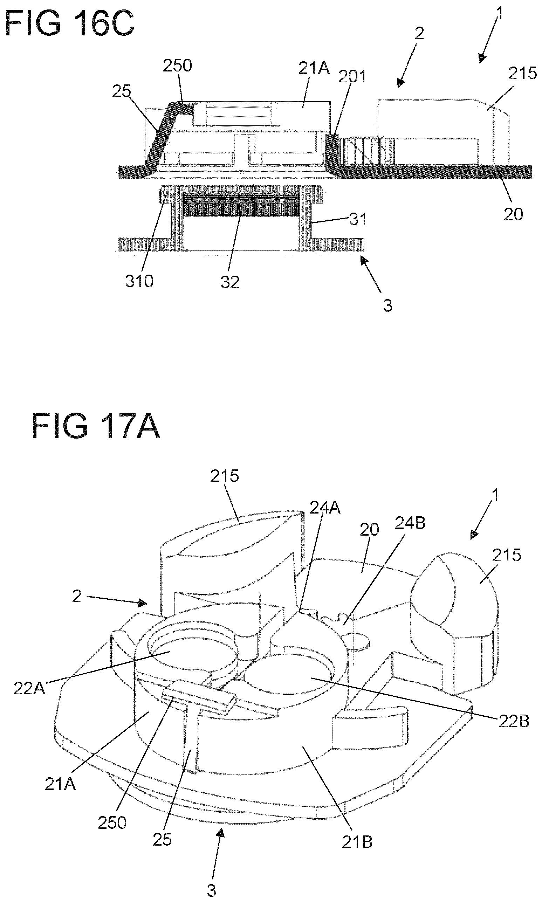

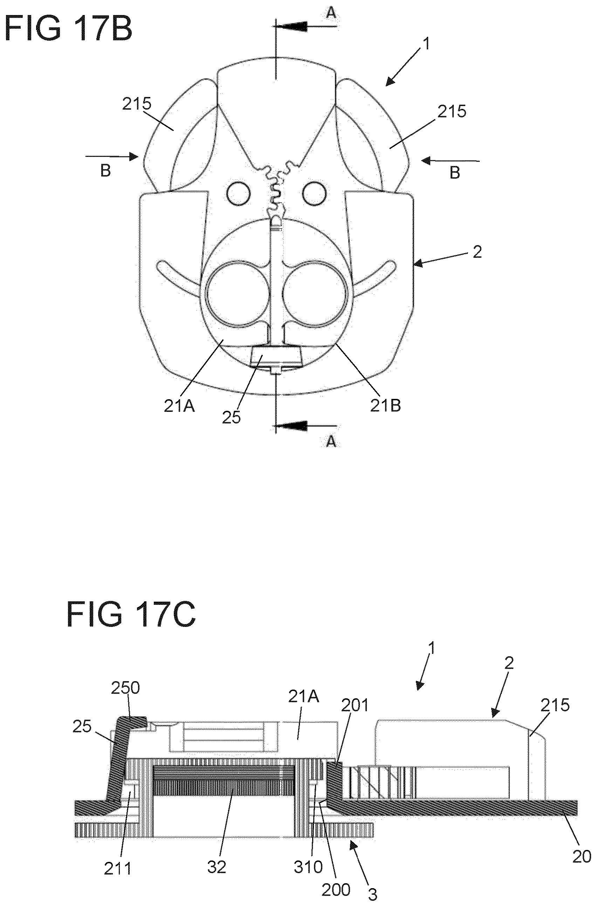

Bei einem in Fig. 16A-16C und 17A-17C dargestellten Ausführungsbeispiel wirkt ein Sperrelement 25 zwischen den Verschlusselementen 21A, 21B in der Öffnungsstellung (Fig. 16A-16C), um die Verschlusselemente 21A, 21B in ihrer geöffneten Position zu halten. Analog wie dies vorangehend anhand von Fig. 6A bis 7D beschrieben worden ist, wird das Sperrelement 25 beim Schließen der Verschlussvorrichtung 1 entsperrt, sodass die Verschlusselemente 21A, 21B in der Schließstellung (Fig. 17A-17C) wiederum verriegelnd in Eingriff mit dem Eingriffselement 31 des Verschlussteils 3 stehen.

Über einen Führungsabschnitt 201 an einem dem Sperrelement 25 abgewandten Randabschnitt der Öffnung 200 im Gehäuseelement 20 des Verschlussteils 2 wird eine Führung für das Eingriffselement 31 beim Ansetzen der Verschlussteile 2, 3 aneinander bereitgestellt, sodass das Eingriffselement 31 mit dem Eingriffsabschnitt 310 in definierter Weise mit dem Sperrelement 25 wechselwirkt.

Betätigungsabschnitte 215 an den Verschlusselementen 21A, 21B sind bei dem dargestellten Ausführungsbeispiel durch abgerundete Knopfelemente, die entlang der Betätigungsrichtung B zueinander hin gedrückt werden können, ausgestaltet.

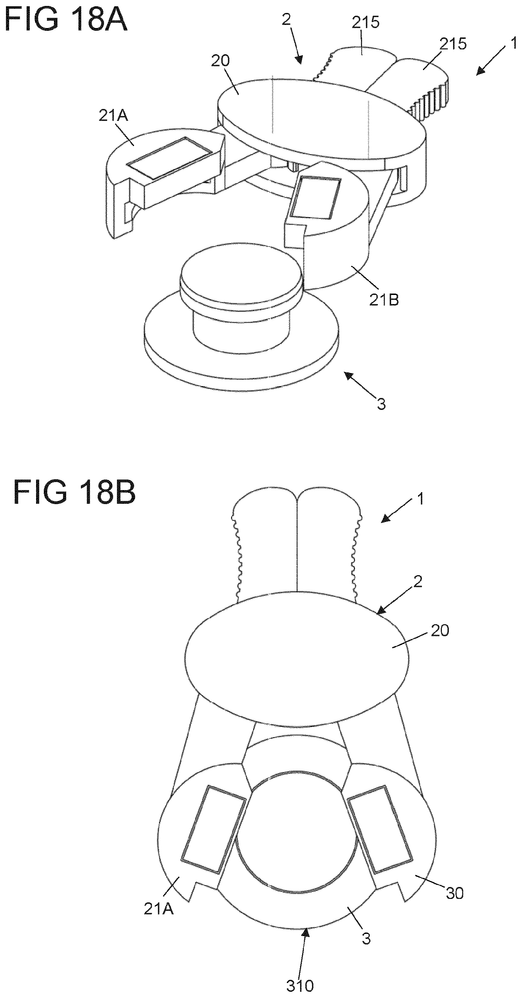

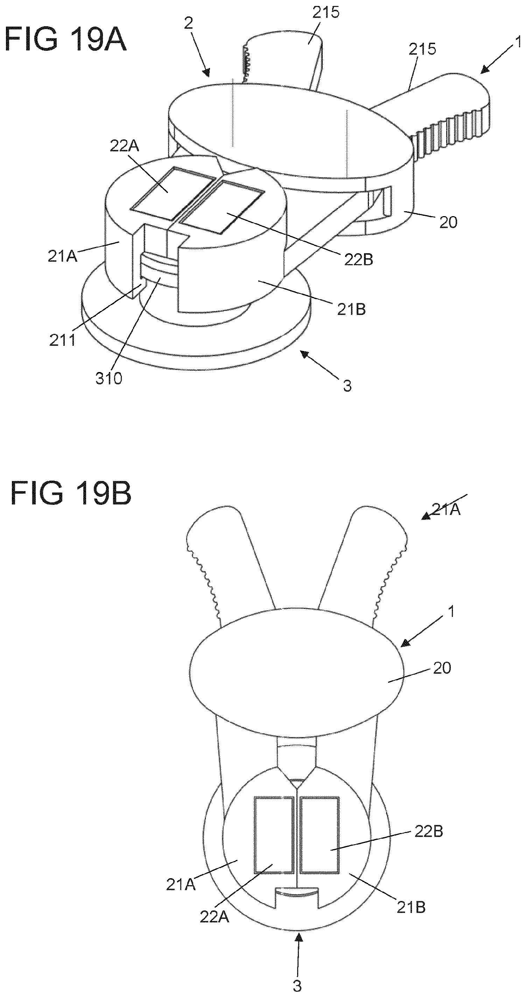

Bei einem in Fig. 18A, 18B und 19A, 19B dargestellten Ausführungsbeispiel ist das Gehäuseelement 20 als einhausendes Gehäuse ausgebildet, das die Verschlusselemente 21A, 21B im Bereich der Achselemente 23A, 23B einfasst. Ansonsten ist das Ausführungsbeispiel funktional identisch dem Ausführungsbeispiel gemäß Fig. 8A bis 13, sodass auch auf die vorangehenden Ausführungen verwiesen werden soll.

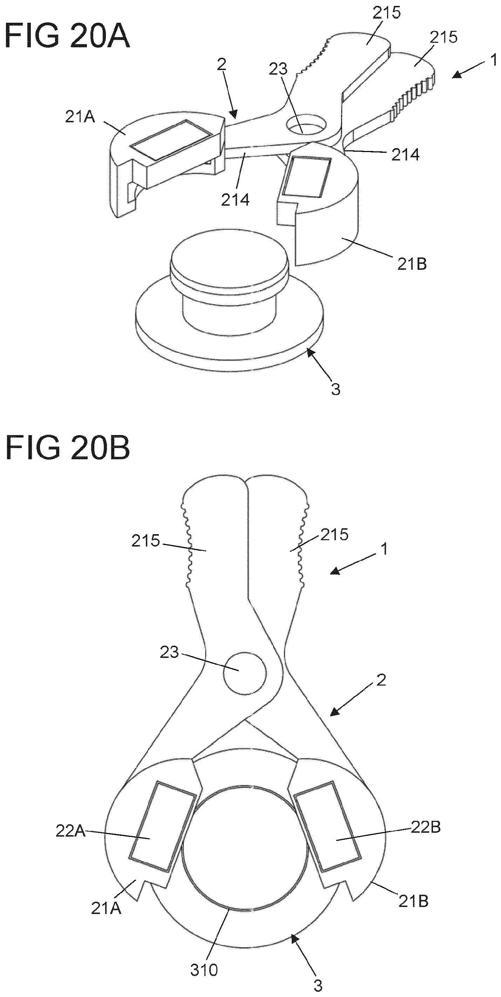

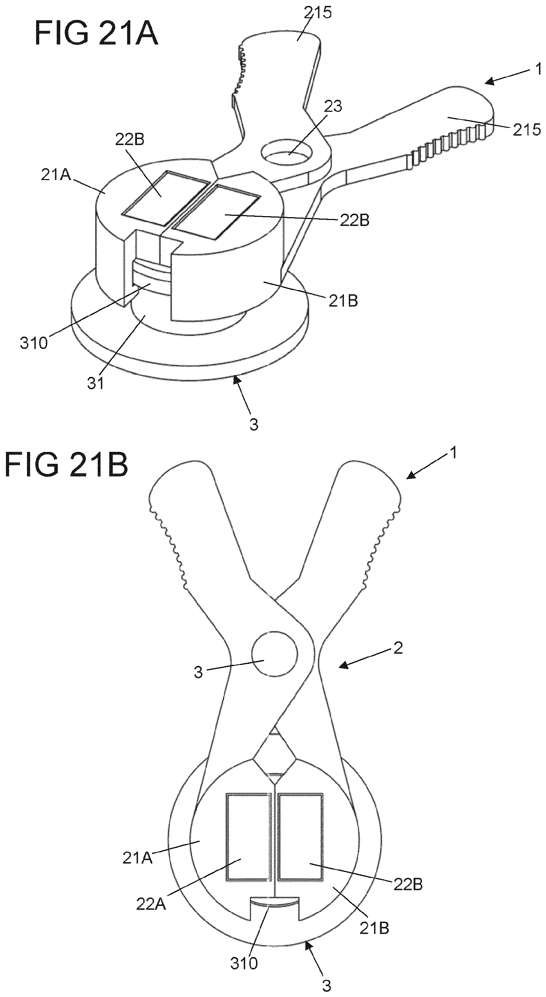

Bei einem in Fig. 20A, 20B und 21A, 21B dargestellten Ausführungsbeispiel sind die Verschlusselemente 21A, 21B an einem gemeinsamen Achselement 23 schwenkbar gelagert und somit schwenkbar aneinander angeordnet. Auf ein zusätzliches Basiselement in Form eines Gehäuseelements kann in diesem Fall verzichtet werden.

Abgesehen hiervon ist das Ausführungsbeispiel funktional identisch dem vorangehend beschriebenen Ausführungsbeispiel.

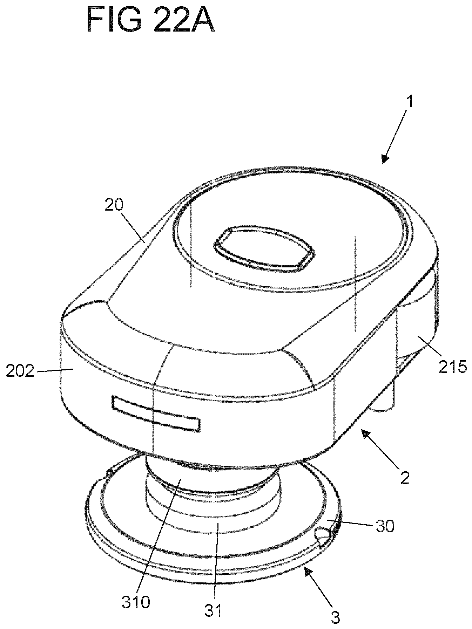

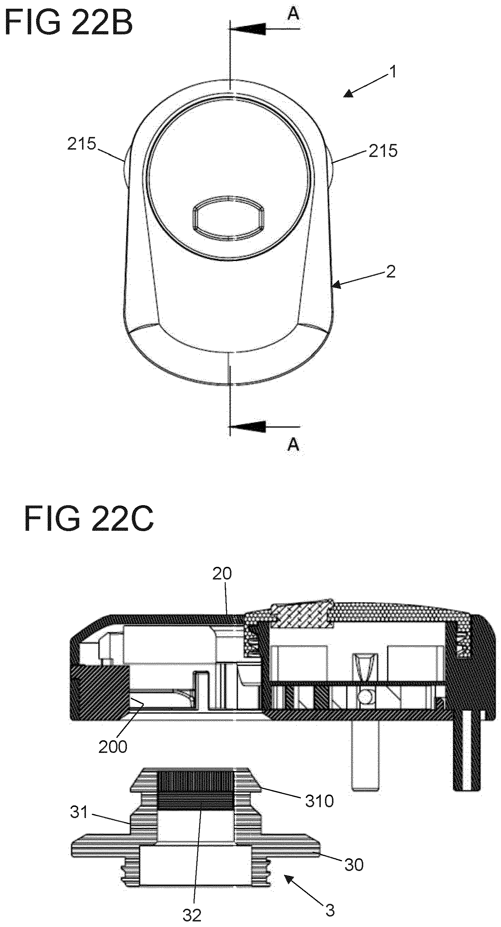

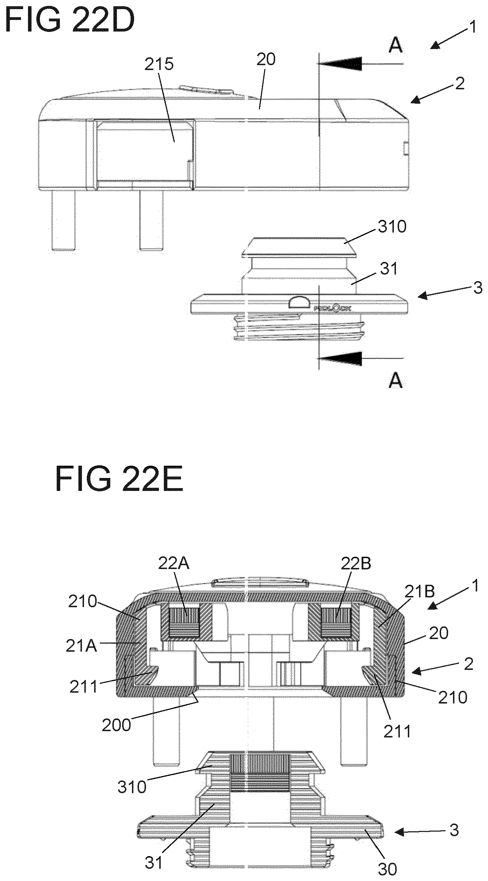

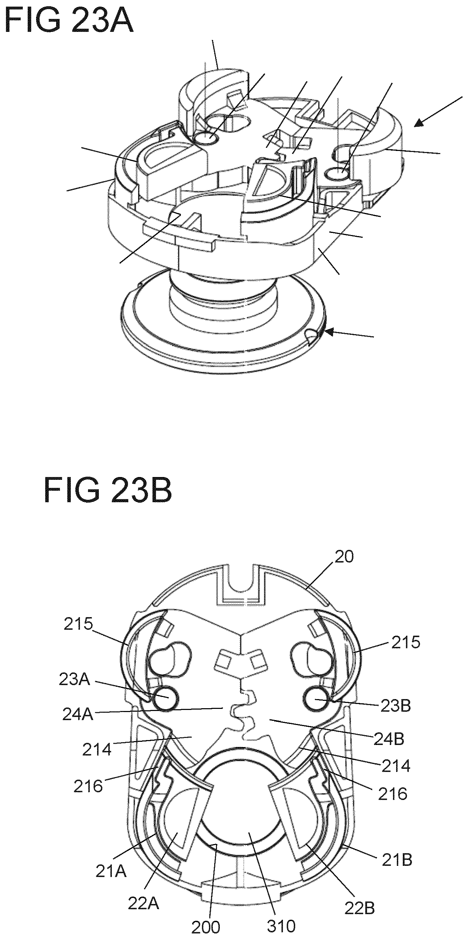

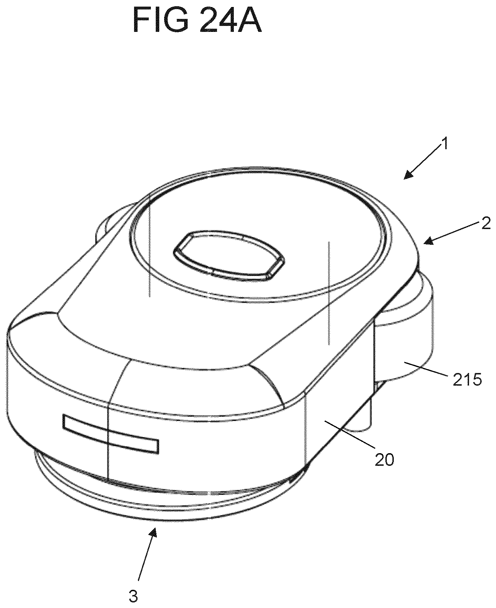

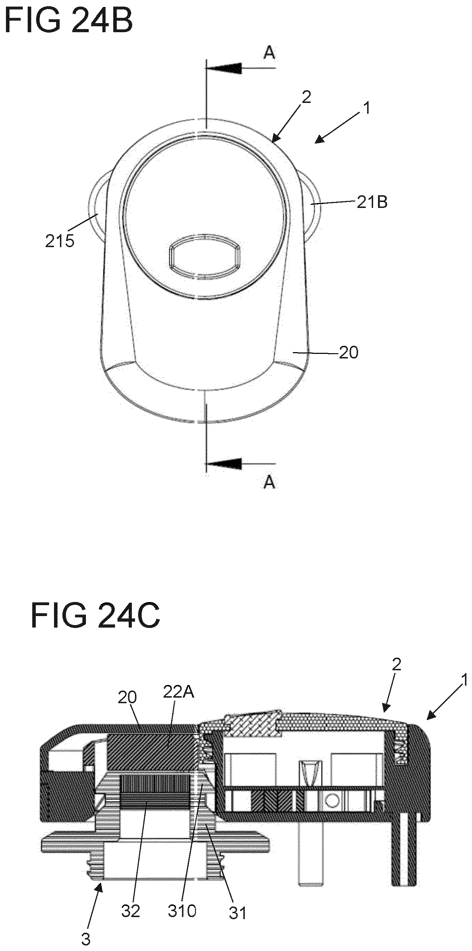

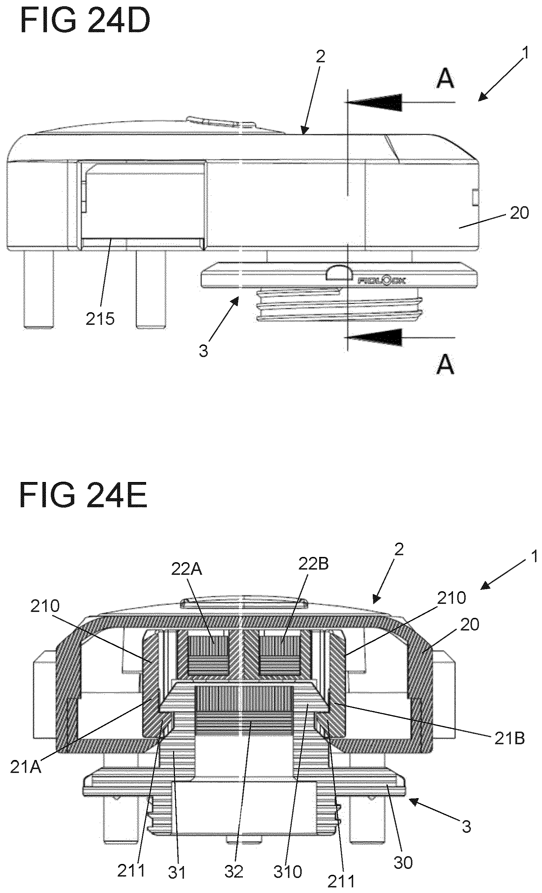

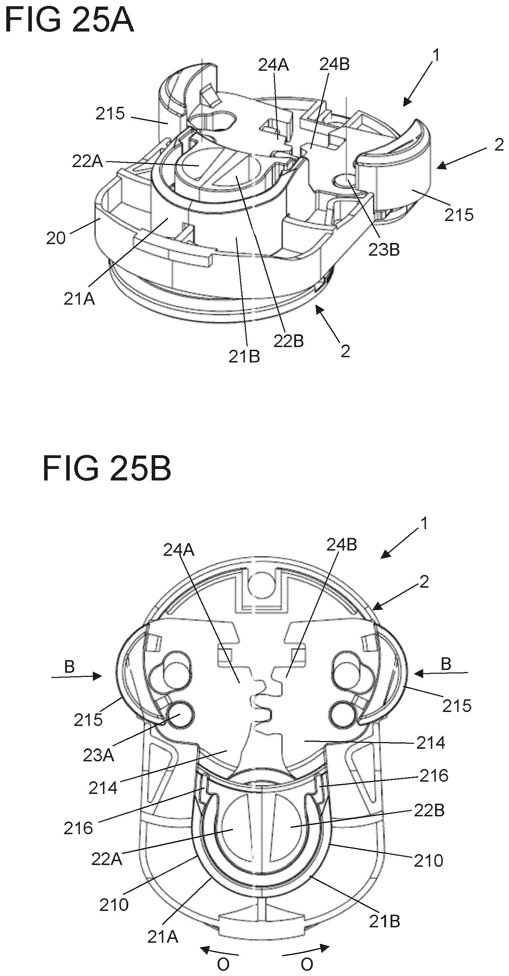

Bei einem in Fig. 22A-22E bis Fig. 25A, 25B dargestellten Ausführungsbeispiel weist das Verschlussteil 2 ein Gehäuseelement 20 in Form eines Gehäuses auf, das durch Gehäuseteile 202, 203 zusammengesetzt ist und die Verschlusselemente 21A, 21B in seinem Inneren um an das Gehäuseteil 203 angeformte Achselemente 23A, 23B schwenkbar lagert. Betätigungsabschnitte 215 sind hierbei seitlich an dem Gehäuse zugänglich und können durch einen Nutzer betätigt werden, insbesondere um die Verschlusselemente 21A, 21C aus der Schließstellung (Fig. 24A-24E, 25A, 25B) in die Öffnungsstellung (Fig. 22A-22E, 23A, 23B) zu überführen.

Bei dem dargestellten Ausführungsbeispiel sind die Verschlusselemente 21A, 21B mit Klauenabschnitten 210 geformt, die über je einen Verbindungsabschnitt 216 mit dem Schaftabschnitt 214 des zugeordneten Verschlusselements 21A, 21B verbunden sind. Im Bereich des Verbindungsabschnitts 216 ist das Verschlusselement 21A, 21B hierbei elastisch, sodass der Klauenabschnitt 210 elastisch zu dem Schaftabschnitt 214 und insbesondere dem starr mit dem Schaftabschnitt 214 verbundenen Magnetelement 22A, 22B auslenkbar ist. Es besteht somit eine Elastizität zwischen den Klauenabschnitten 210 und den Magnetelementen 22A, 22B, was vorteilhaft sein kann, um eine spielfreie Verbindung zwischen den Verschlusselementen 21A, 21B und dem Eingriffselement 31 des Verschlussteils 3 herzustellen, wie dies beispielsweise aus der Schnittansicht gemäß Fig. 24C und 24E ersichtlich ist.

Ansonsten ist das dargestellte Ausführungsbeispiel funktional identisch beispielsweise dem Ausführungsbeispiel gemäß Fig. 8A bis 13, sodass auch auf die vorangehenden Ausführungen verwiesen werden soll.

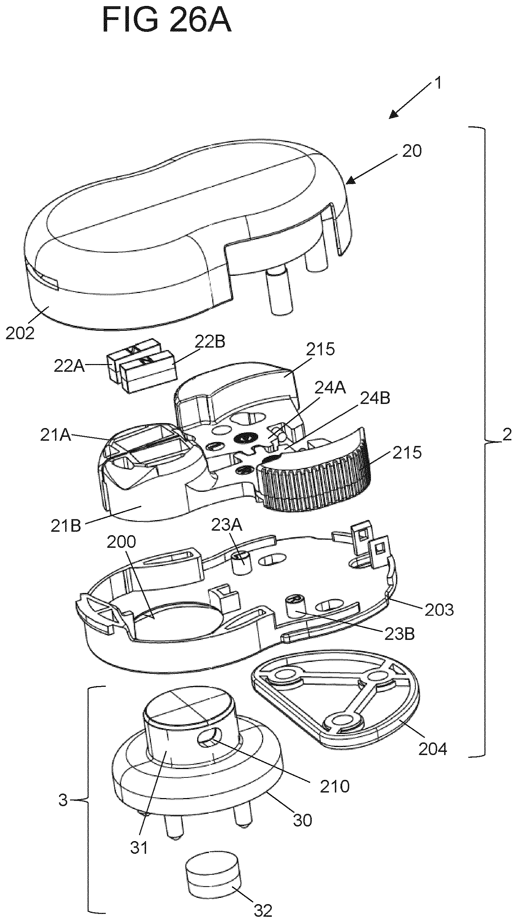

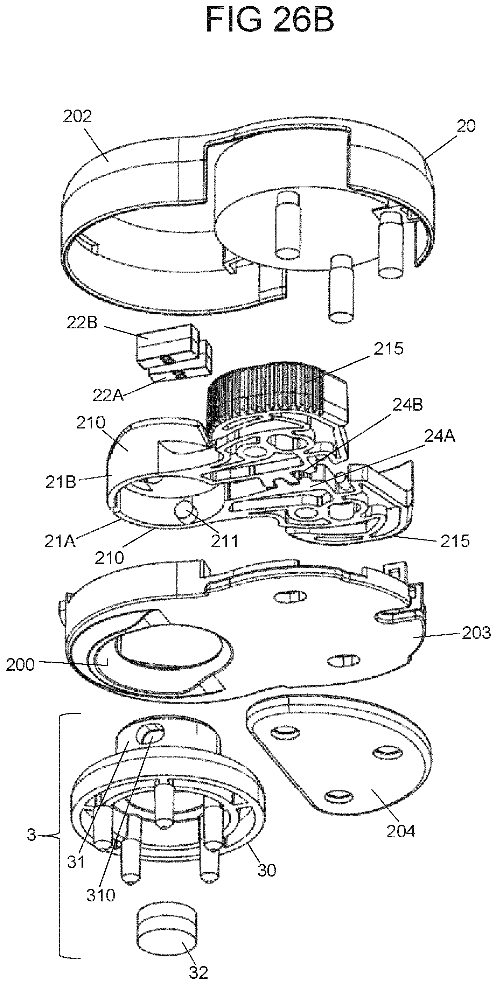

Bei einem in Fig. 26A, 26B dargestellten Ausführungsbeispiel sind an den Verschlusselementen 21A, 21B Formschlussabschnitte 211 in Form je eines Zapfens geformt, der zum Eingriff in einen zugeordneten Eingriffsabschnitt 310 in Form einer Eingriffsöffnung an dem Eingriffselement 31 des Verschlussteils 3 dient. In Abwandlung der vorangehend beschriebenen Ausführungsbeispiele sind die Formschlussabschnitte 211 der Verschlusselemente 21A, 21B somit nicht durch kreisbogenförmige Rastvorsprünge geformt, sondern durch nach innen vorstehende Zapfen, die in der Schließstellung mit den Eingriffsabschnitten 310 in Form der Eingriffsöffnungen beidseitig an dem Eingriffselement 31 des Verschlussteils 3 in Eingriff stehen.

Bei dem Ausführungsbeispiel gemäß Fig. 26A, 26B sind die Verschlusselemente 21A, 21B in einem Gehäuseelement 20 in Form eines durch Gehäuseteile 202, 203, 204 gebildeten Gehäuses eingefasst und darin schwenkbar gelagert. Betätigungsabschnitte 215 sind, analog dem Ausführungsbeispiel gemäß Fig. 22A bis 25B, von außen zugänglich und können zum Verschwenken der Verschlusselemente 21A, 21B, insbesondere zum Öffnen der Verschlussrichtung 1, betätigt werden.

Funktional ist das Ausführungsbeispiel gemäß Fig. 26A, 26B ansonsten identisch dem Ausführungsbeispiel gemäß Fig. 8A bis 13, sodass auf die vorangehenden Ausführungen verwiesen werden soll.

Die vorangehend beschriebenen Verschlussvorrichtungen 1 können zum Verbinden zweier Baugruppen miteinander verwendet werden, beispielsweise als Verschluss für Taschen, für Bekleidungsstücke, für Schuhe, für Helme, für Sicherheitsausrüstung oder für andere Baugruppen, die belastbar zueinander festgelegt werden sollen.

Die Verschlussvorrichtung 1 kann jedoch auch zum Herstellen einer elektrischen Verbindung dienen. Hierzu können an den Verschlussteilen 2, 3 elektrische Kontaktelemente angeordnet sein, die beim Schließen der Verschlussvorrichtung 1 elektrisch kontaktierend miteinander in Anlage gelangen, sodass über die Verschlussteile 2, 3 eine elektrische Verbindung zwischen einer oder mehreren elektrischen Leitungen hergestellt wird.

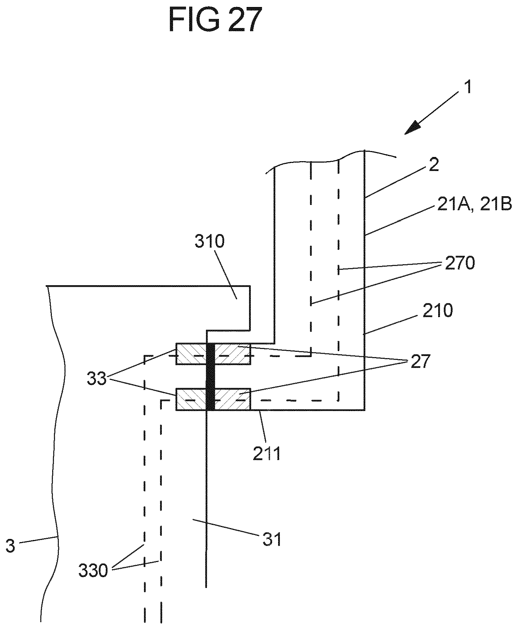

Beispielsweise können solche Kontakte an den Verschlusselementen 21A, 21B und dem Eingriffselement 31 angeordnet sein. So können bei den vorangehend beschriebenen Ausführungsbeispielen an dem Klauenabschnitt 210 von einem oder von beiden Verschlusselementen 21A, 21B elektrische Kontaktelemente 27 angeordnet sein, die mit elektrischen Zuleitungen 270 in Verbindung stehen und in der Schließstellung der Verschlussvorrichtung 1 mit Kontaktelementen 33 am Eingriffselement 31 des Verschlussteils 3 elektrisch kontaktieren, wie dies schematisch in Fig. 27 dargestellt ist. Die Kontaktelemente 27 können beispielsweise kreisbogenförmig innenseitig an dem Randabschnitt 212 des jeweiligen Formschlussabschnitts 211 erstreckt sein. Die Kontaktelemente 33 am Eingriffselement 31 können demgegenüber beispielsweise umfänglich geschlossen als Kontaktringe an dem Eingriffselement 31 geformt sein. Zuleitungen 270, 330 können in das jeweilige eingebettet oder auch auf einer Oberfläche angebracht sein.

Auch andere Anordnungen von Kontaktelementen sind denkbar und möglich.

Beispielsweise ist denkbar, dass die Verschlusselemente 21A, 21B und zudem auch das Eingriffselement 31 elektrisch leitfähig sind und somit eine elektrische Kontaktierung unmittelbar über die Verschlusselemente 21A, 21B und das Eingriffselement 31 hergestellt wird.

Der der Erfindung zugrunde liegende Gedanke ist nicht auf die vorangehend beschriebenen Ausführungsbeispiele beschränkt, sondern lässt sich auch in gänzlich andersgearteter Weise verwirklichen.

Obwohl bei den vorangehend beschriebenen Ausführungsbeispielen jeweils zwei Verschlusselemente vorgesehen sind, ist dies nicht beschränkend. Grundsätzlich kann auch nur ein einziges Verschlusselement vorhanden sein, das dazu ausgestaltet ist, eine verriegelnde Verbindung mit einem zugeordneten Eingriffselement herzustellen.

Das zumindest eine Verschlusselement ist Erfindungsgemäß schwenkbar an einem zugeordneten Basiselement, zum Beispiel in Form eines Gehäuseelements, gelagert.

### Bezugszeichenliste

- 1: Verschlussvorrichtung
- 2: Verschlussteil
- 20: Gehäuseelement
- 200: Öffnung
- 201: Führungsabschnitt
- 202-204: Gehäuseteil
- 21A, 21B: Verschlusselement
- 210: Klauenabschnitt
- 211: Formschlussabschnitt
- 212: Randabschnitt
- 213: Wandungsabschnitt
- 214: Schaftabschnitt
- 215: Betätigungsabschnitt
- 216: Verbindungsabschnitt
- 22A, 22B: Magnetelement
- 23, 23A, 23B: Achselement
- 24A, 24B: Kopplungseinrichtung
- 25: Sperrelement
- 250: Sperrabschnitt
- 251: Auslöseabschnitt
- 26: Vorspannelement
- 27: Elektrisches Kontaktelement
- 270: Zuleitung
- 3: Verschlussteil
- 30: Grundkörper
- 31: Eingriffselement
- 310: Eingriffsabschnitt
- 32: Magnetelement
- 33: Elektrisches Kontaktelement
- 330: Zuleitung
- B: Betätigungsrichtung
- D1, D2: Schwenkachse
- N, S: Magnetpol
- O: Öffnungsrichtung
- X1: Schließrichtung
- X2: Eingriffsrichtung

## Patentansprüche

1. Verschlussvorrichtung (1), mit
einem ersten Verschlussteil (2), das ein Basiselement und zumindest ein zu dem Basiselement (20) bewegbares Verschlusselement (21A, 21B) mit einem daran angeordneten Formschlussabschnitt (211) aufweist, und
einem zweiten Verschlussteil (3), das ein Eingriffselement (31) mit einem daran geformten Eingriffsabschnitt (310) aufweist,
wobei das erste Verschlussteil (2) und das zweite Verschlussteil (3) in einer Öffnungsstellung der Verschlussvorrichtung (1) voneinander getrennt und zum Schließen der Verschlussvorrichtung (1) entlang einer Schließrichtung (X1) aneinander ansetzbar sind und
wobei der Formschlussabschnitt (211) des zumindest einen Verschlusselements (21A, 21B) in eine Eingriffsrichtung (X2) im Wesentlichen quer zu der Schließrichtung (X1) mit dem Eingriffsabschnitt (310) des Eingriffselements (31) in Eingriff bringbar ist, sodass in einer Schließstellung das erste Verschlussteil (2) und das zweite Verschlussteil (3) entlang der Schließrichtung (X1) aneinander gehalten sind,
mit einem an dem zumindest einen Verschlusselement (21A, 21B) des ersten Verschlussteils (2) angeordneten, ersten Magnetelement (22A, 22B) und einem an dem Eingriffselement (31) des zweiten Verschlussteils (3) angeordneten, zweiten Magnetelement (32), wobei das zumindest eine Verschlusselement (21A, 21B) des ersten Verschlussteils (2) in der Öffnungsstellung eine erste Position relativ zu dem Basiselement (20) einnimmt und das erste Magnetelement (22A, 22B) und das zweite Magnetelement (32) beim Schließen magnetisch anziehend zusammenwirken, sodass das zumindest eine Verschlusselement (21A, 21B) mit dem Formschlussabschnitt (211) in die Eingriffsrichtung (X2) aus der ersten Position relativ zu dem Basiselement (20) bewegt wird, um den Formschlussabschnitt (211) mit dem Eingriffsabschnitt (310) des Eingriffselements (31) in Eingriff zu bringen,
**dadurch gekennzeichnet, dass** das zumindest eine Verschlusselement (21A, 21B) um eine Schwenkachse (D1, D2) zu dem Basiselement (20) schwenkbar ist.

2. Verschlussvorrichtung (1) nach Anspruch 1, **dadurch gekennzeichnet, dass** das zumindest eine Verschlusselement (21A, 21B) des ersten Verschlussteils (2) in der Öffnungsstellung so kraftbeaufschlagt ist, dass das zumindest eine Verschlusselement (21A, 21B) die erste Position relativ zu dem Basiselement (20) einnimmt.

3. Verschlussvorrichtung (1) nach Anspruch 1 oder 2, **dadurch gekennzeichnet, dass** das zumindest eine Verschlusselement (21A, 21B) des ersten Verschlussteils (2) in der Öffnungsstellung durch Magnetwirkung des ersten Magnetelements (22A, 22B) kraftbeaufschlagt ist.

4. Verschlussvorrichtung (1) nach einem der vorangehenden Ansprüche, **dadurch gekennzeichnet, dass** das zumindest eine Verschlusselement (21A, 21B) entgegen der Eingriffsrichtung (X2) zu dem Basiselement (20) bewegbar ist, um die Wirkverbindung mit dem Eingriffsabschnitt (310) aufzuheben.

5. Verschlussvorrichtung (1) nach einem der vorangehenden Ansprüche, **dadurch gekennzeichnet, dass** die Schwenkachse (D1, D2) entlang der Schließrichtung (X1), senkrecht zur Schließrichtung (X1) oder unter einem schrägen Winkel zur Schließrichtung (X1) erstreckt ist.

6. Verschlussvorrichtung (1) nach einem der vorangehenden Ansprüche, **dadurch gekennzeichnet, dass** das zumindest eine Verschlusselement (21A, 21B) einen Klauenabschnitt (210) aufweist, der einen Formschlussabschnitt (211) zum formschlüssigen Hintergreifen des Eingriffsabschnitts (310) ausbildet.

7. Verschlussvorrichtung (1) nach Anspruch 6, **dadurch gekennzeichnet, dass** der Formschlussabschnitt (211) entlang eines Kreisbogens um die Schließrichtung(X) erstreckt ist.

8. Verschlussvorrichtung (1) nach Anspruch 6 oder 7, **dadurch gekennzeichnet, dass** der Formschlussabschnitt (211) elastisch mit dem zugeordneten, ersten Magnetelement (22A, 22B) verbunden ist.

9. Verschlussvorrichtung (1) nach einem der vorangehenden Ansprüche, **dadurch gekennzeichnet, dass** das Basiselement durch ein Gehäuseelement (20) verwirklicht ist.

10. Verschlussvorrichtung (1) nach einem der vorangehenden Ansprüche, **dadurch gekennzeichnet, dass** das erste Verschlussteil (2) zwei Verschlusselemente (21A, 21B) und zwei jeweils an einem der Verschlusselemente (21A, 21) angeordnete, erste Magnetelemente (22A, 22B) aufweist.

11. Verschlussvorrichtung (1) nach Anspruch 10, **dadurch gekennzeichnet, dass** die Verschlusselemente (21A, 21B) über eine Kopplungseinrichtung (24A, 24B) zur gemeinsamen Bewegung miteinander zwangsgekoppelt sind.

12. Verschlussvorrichtung (1) nach Anspruch 10 oder 11, **dadurch gekennzeichnet, dass** die Verschlusselemente (21A, 21B) in der Öffnungsstellung durch abstoßende Wirkung der ersten Magnetelemente (22A, 22B) relativ zueinander kraftbeaufschlagt sind und beim Schließen durch magnetische Wechselwirkung mit dem zweiten Magnetelement (32) zueinander hin gezogen werden.

13. Verschlussvorrichtung (1) nach einem der vorangehenden Ansprüche, **dadurch gekennzeichnet, dass** das erste Verschlussteil (2) ein Vorspannelement (26) aufweist, das ausgebildet ist, das zumindest eine Verschlusselement (21A, 21B) in die Eingriffsrichtung (X2) zu belasten, insbesondere wobei das Vorspannelement (26) durch eine mechanische Feder ausgebildet ist.

14. Verschlussvorrichtung (1) nach einem der vorangehenden Ansprüche, **dadurch gekennzeichnet, dass** das erste Verschlussteil (2) zumindest einen ersten elektrischen Kontakt (27) und das zweite Verschlussteil (3) zumindest einen zweiten elektrischen Kontakt (33) aufweisen, wobei der zumindest eine erste elektrische Kontakt (27) und der zumindest eine zweite elektrische Kontakt (33) in der Schließstellung elektrisch miteinander kontaktiert sind, insbesondere wobei der zumindest eine erste elektrische Kontakt (27) an dem zumindest einen Verschlusselement (21A, 21B) angeordnet ist.

## Claims

1. A closure device (1), comprising
a first closure part (2), which includes a base element and at least one closure element (21A, 21B) movable relative to the base element (20) with a form-fitting portion (211) arranged thereon, and
a second closure part (3), which includes an engagement element (31) with an engagement portion (310) formed thereon,
wherein in an open position of the closure device (1) the first closure part (2) and the second closure part (3) are separated from each other and can be attached to each other along a closing direction (X1) for closing the closure device (1), and
wherein the form-fitting portion (211) of the at least one closure element (21A, 21B) can be brought into engagement with the engagement portion (310) of the engagement element (31) in an engagement direction (X2) substantially transversely to the closing direction (X1), so that in a closed position the first closure part (2) and the second closure part (3) are held at each other along the closing direction (X1),
further comprising a first magnetic element (22A, 22B) arranged on the at least one closure element (21A, 21B) of the first closure part (2) and a second magnetic element (32) arranged on the engagement element (31) of the second closure part (3), wherein in the open position the at least one closure element (21A, 21B) of the first closure part (2) takes a first position relative to the base element (20), and on closing the first magnetic element (22A, 22B) and the second magnetic element (32) cooperate in a magnetically attracting way so that the at least one closure element (21A, 21B) is moved with the form-fitting portion (211) in the engagement direction (X2) out of the first position relative to the base element (20) in order to bring the form-fitting portion (211) into engagement with the engagement portion (310) of the engagement element (31),
**characterized in that** the at least one closure element (21A, 21B) can be pivoted relative to the base element (20) about a pivot axis (D1, D2).

2. The closure device (1) according to claim 1, **characterized in that** a force is applied onto the at least one closure element (21A, 21B) of the first closure part (2) in the open position such that the at least one closure element (21A, 21B) takes the first position relative to the base element (20).

3. The closure device (1) according to claim 1 or 2, **characterized in that** in the open position a force is applied onto the at least one closure element (21A, 21B) of the first closure part (2) by magnetic action of the first magnetic element (22A, 22B).

4. The closure device (1) according to any of the preceding claims, **characterized in that** the at least one closure element (21A, 21B) can be moved relative to the base element (20) against the engagement direction (X2) in order to eliminate the operative connection with the engagement portion (310).

5. The closure device (1) according to any of the preceding claims, **characterized in that** the pivot axis (D1, D2) extends along the closing direction (X1), perpendicularly to the closing direction (X1) or at an oblique angle to the closing direction (X1).

6. The closure device (1) according to any of the preceding claims, **characterized in that** the at least one closure element (21A, 21B) includes a claw portion (210) that forms a form-fitting portion (211) for positively engaging behind the engagement portion (310).

7. The closure device (1) according to claim 6, **characterized in that** the form-fitting portion (211) extends along a circular arc around the closing direction (X).

8. The closure device (1) according to claim 6 or 7, **characterized in that** the form-fitting portion (211) is elastically connected to the associated, first magnetic element (22A, 22B).

9. The closure device (1) according to any of the preceding claims, **characterized in that** the base element is realized by a housing element (20).

10. The closure device (1) according to any of the preceding claims, **characterized in that** the first closure part (2) includes two closure elements (21A, 21B) and two first magnetic elements (22A, 22B) each arranged on one of the closure elements (21A, 21B).

11. The closure device (1) according to claim 10, **characterized in that** the closure elements (21A, 21B) are forcibly coupled to each other via a coupling device (24A, 24B) for joint movement.

12. The closure device (1) according to any of claims 10 or 11, **characterized in that** in the open position a force is applied onto the closure elements (21A, 21B) due to the repelling effect of the first magnetic elements (22A, 22B) relative to each other and on closing said closure elements are drawn towards each other due to magnetic interaction with the second magnetic element (32).

13. The closure device (1) according to any of the preceding claims, **characterized in that** the first closure part (2) includes a pretensioning element (26) which is configured to load the at least one closure element (21A, 21B) in the engagement direction (X2), in particular wherein the pretensioning element (26) is formed by a mechanical spring.

14. The closure device (1) according to any of the preceding claims, **characterized in that** the first closure part (2) includes at least one first electrical contact (27) and the second closure part (3) includes at least one second electrical contact (33), wherein in the closed position the at least one first electrical contact (27) and the at least one second electrical contact (33) are electrically contacted with each other, in particular wherein the at least one first electrical contact (27) is arranged on the at least one closure element (21A, 21B).

## Revendications

1. Dispositif de fermeture (1), comprenant
une première partie de fermeture (2) qui comprend un élément de base et au moins un élément de fermeture (21A, 21B) mobile par rapport à l'élément de base (20), avec une section d'engagement positif (211) agencée sur celui-ci, et
une deuxième partie de fermeture (3) qui comprend un élément d'engagement (31) avec une section d'engagement (310) formée sur celui-ci,
dans lequel la première partie de fermeture (2) et la deuxième partie de fermeture (3) sont séparées l'une de l'autre dans une position d'ouverture du dispositif de fermeture (1) et peuvent être appliquées l'une contre l'autre le long d'une direction de fermeture (X1) pour fermer le dispositif de fermeture (1), et
dans lequel la section d'engagement positif (211) de l'au moins un élément de fermeture (21A, 21B) peut être amenée en engagement avec la section d'engagement (310) de l'élément d'engagement (31) dans une direction d'engagement (X2) sensiblement transversale à la direction de fermeture (X1), de sorte que dans une position de fermeture, la première partie de fermeture (2) et la deuxième partie de fermeture (3) sont maintenues l'une contre l'autre le long de la direction de fermeture (X1),
avec un premier élément magnétique (22A, 22B) agencé sur l'au moins un élément de fermeture (21A, 21B) de la première partie de fermeture (2) et un deuxième élément magnétique (32) agencé sur l'élément d'engagement (31) de la deuxième partie de fermeture (3), l'au moins un élément de fermeture (21A, 21B) de la première partie de fermeture (2) prenant, dans la position d'ouverture, une première position par rapport à l'élément de base (20) et le premier élément magnétique (22A, 22B) et le deuxième élément magnétique (32) coopèrent par attraction magnétique lors de la fermeture, de sorte que ledit au moins un élément de fermeture (21A, 21B) est déplacé avec la section à engagement positif (211) dans la direction d'engagement (X2) depuis la première position par rapport à l'élément de base (20), afin d'amener la section à engagement positif (211) en engagement avec la section d'engagement (310) de l'élément d'engagement (31),
**caractérisé en ce que** ledit au moins un élément de fermeture (21A, 21B) peut pivoter autour d'un axe de pivotement (D1, D2) par rapport à l'élément de base (20).

2. Dispositif de fermeture (1) selon la revendication 1, **caractérisé en ce que** ledit au moins un élément de fermeture (21A, 21B) de la première partie de fermeture (2) est soumis à une force dans la position d'ouverture de telle sorte que ledit au moins un élément de fermeture (21A, 21B) occupe la première position par rapport à l'élément de base (20).

3. Dispositif de fermeture (1) selon la revendication 1 ou 2, **caractérisé en ce que** ledit au moins un élément de fermeture (21A, 21B) de la première partie de fermeture (2) est soumis à une force dans la position d'ouverture par l'action magnétique du premier élément magnétique (22A, 22B).

4. Dispositif de fermeture (1) selon l'une quelconque des revendications précédentes, **caractérisé en ce que** ledit au moins un élément de fermeture (21A, 21B) peut être déplacé dans la direction opposée à la direction d'engagement (X2) vers l'élément de base (20) afin de supprimer la liaison active avec la section d'engagement (310).

5. Dispositif de fermeture (1) selon l'une quelconque des revendications précédentes, **caractérisé en ce que** l'axe de pivotement (D1, D2) s'étend le long de la direction de fermeture (X1), perpendiculairement à la direction de fermeture (X1) ou selon un angle oblique par rapport à la direction de fermeture (X1).

6. Dispositif de fermeture (1) selon l'une quelconque des revendications précédentes, **caractérisé en ce que** ledit au moins un élément de fermeture (21A, 21 B) comprend une section de griffe (210) formant une section d'engagement positif (211) pour s'engager positivement derrière la section d'engagement (310).

7. Dispositif de fermeture (1) selon la revendication 6, **caractérisé en ce que** la section à engagement positif (211) s'étend le long d'un arc de cercle autour de la direction de fermeture (X).

8. Dispositif de fermeture (1) selon la revendication 6 ou 7, **caractérisé en ce que** la section à engagement positif (211) est reliée de manière élastique au premier élément magnétique associé (22A, 22B).

9. Dispositif de fermeture (1) selon l'une quelconque des revendications précédentes, **caractérisé en ce que** l'élément de base est réalisé par un élément de boîtier (20).

10. Dispositif de fermeture (1) selon l'une quelconque des revendications précédentes, **caractérisé en ce que** la première partie de fermeture (2) comporte deux éléments de fermeture (21A, 21B) et deux premiers éléments magnétiques (22A, 22B) agencés respectivement sur l'un des éléments de fermeture (21A, 21).

11. Dispositif de fermeture (1) selon la revendication 10, **caractérisé en ce que** les éléments de fermeture (21A, 21B) sont couplés de force l'un à l'autre par un dispositif de couplage (24A, 24B) pour un mouvement commun.

12. Dispositif de fermeture (1) selon la revendication 10 ou 11, **caractérisé en ce que** les éléments de fermeture (21A, 21B) sont sollicités en force l'un par rapport à l'autre dans la position d'ouverture par l'effet répulsif des premiers éléments magnétiques (22A, 22B) et sont attirés l'un vers l'autre lors de la fermeture par interaction magnétique avec le deuxième élément magnétique (32).

13. Dispositif de fermeture (1) selon l'une quelconque des revendications précédentes, **caractérisé en ce que** la première partie de fermeture (2) présente un élément de précontrainte (26) qui est conçu pour solliciter ledit au moins un élément de fermeture (21A, 21B) dans la direction d'engagement (X2), en particulier dans lequel l'élément de précontrainte (26) est formé par un ressort mécanique.

14. Dispositif de fermeture (1) selon l'une quelconque des revendications précédentes, **caractérisé en ce que** la première partie de fermeture (2) présente au moins un premier contact électrique (27) et la deuxième partie de fermeture (3) au moins un deuxième contact électrique (33), ledit au moins un premier contact électrique (27) et ledit au moins un deuxième contact électrique (33) étant en contact électrique l'un avec l'autre dans la position de fermeture, en particulier dans lequel ledit au moins un premier contact électrique (27) est agencé sur ledit au moins un élément de fermeture (21A, 21B).
